(19) Europäisches Patentamt / European Patent Office / Office européen des brevets

(11) EP 3 802 629 B1

(12) EUROPEAN PATENT SPECIFICATION

(45) Date of publication and mention of the grant of the patent:
**01.05.2024 Bulletin 2024/18**

(21) Application number: **19816159.8**

(22) Date of filing: **04.06.2019**

(51) International Patent Classification (IPC):
***C09D 5/00*** *(2006.01)* ***C09D 5/16*** *(2006.01)*
***C09D 5/02*** *(2006.01)*

(52) Cooperative Patent Classification (CPC):
(C-Sets available)
**C09D 5/02; C08F 2/10; C08F 220/387** (Cont.)

(86) International application number:
**PCT/US2019/035335**

(87) International publication number:
**WO 2019/236544 (12.12.2019 Gazette 2019/50)**

(54) **METHODS FOR REDUCING OR PREVENTING COLLOIDS ADHESION AND/OR FOULING ON A SUBSTRATE, COMPOSITIONS, AND COPOLYMERS USEFUL THEREFOR**

VERFAHREN ZUR VERRINGERUNG ODER VERHINDERUNG VON KOLLOIDALEM ANHAFTEN UND/ODER FOULING AUF EINEM SUBSTRAT, ZUSAMMENSETZUNGEN UND DAFÜR GEEIGNETE COPOLYMERE

PROCÉDÉS DE RÉDUCTION OU DE PRÉVENTION DE L'ADHÉRENCE ET/OU DE L'ENCRASSEMENT DE COLLOÏDES SUR UN SUBSTRAT, COMPOSITIONS ET COPOLYMÈRES UTILES À CET EFFET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.06.2018 US 201862680198 P**
**29.10.2018 EP 18306414**

(43) Date of publication of application:
**14.04.2021 Bulletin 2021/15**

(73) Proprietor: **SPECIALTY OPERATIONS FRANCE**
**69003 Lyon (FR)**

(72) Inventors:
- **LIZARRAGA, Gilda**
  **Chesterfield, PA 08515 (US)**
- **HUTCHISON, Jaime**
  **Bensalem, PA 19020 (US)**
- **GAGE, Laura**
  **Lawrenceville, NJ 08648 (US)**
- **LABEAU, Marie-Pierre**
  **92310 Sevres (FR)**
- **GODY, Guillaume**
  **92500 Rueil-Malmaison (FR)**
- **DEROO, Sophie**
  **69003 Lyon (FR)**
- **MARCHAL, Phillippe**
  **69230 Saint-Genis Laval (FR)**
- **CHOUIRFA, Hamza**
  **93800 Epinay sur Seine (FR)**

(74) Representative: **Roussel, Sandrine**
**Rhodia Opérations**
**Intellectual Assets Management**
**52 rue de la Haie Coq**
**93306 Aubervilliers Cedex (FR)**

(56) References cited:
**WO-A1-2018/017879**
**WO-A2-02/05643**
**WO-A2-2017/223544**
**WO-A2-2018/226854**
**US-A1- 2007 213 426**
**US-A1- 2009 306 292**
**US-B2- 7 923 428**

- **LASCHEWSKY et al.: "Structures and Synthesis of Zwitterionic Polymers", Polymers, vol. 6, 23 May 2014 (2014-05-23), pages 1544-1601, XP055524597, DOI: 10.3390/polym6051544**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

(52) Cooperative Patent Classification (CPC): (Cont.)

C-Sets
**C08F 220/387, C08F 220/20**

## Description

This application claims priority of U.S. Provisional Application No. 62/680198 filed on June 04, 2018, and of European Patent Application No. 18306414.6 filed on October 29, 2018.

## Field of the Invention

The present invention relates to the field of reducing or preventing colloids adhesion and/or fouling on a substrate, and copolymers useful therefor.

## Background

In general, fouling is the accumulation of unwanted material on solid surfaces to the detriment of function. Fouling is usually distinguished from other surface-growth phenomena, in that it occurs on a surface of a component, system or plant performing a defined and useful function, and that the fouling process impedes or interferes with this function. Fouling phenomena are common and diverse, ranging from fouling of ship hulls, natural surfaces in the marine environment, fouling of heat-transfer components in heating and cooling systems through ingredients contained in the cooling water, fouling of metal tools and components in the metal industry, for example, in metal working, like cutting and drilling, among other examples. Fouling materials are also diverse and include materials such as colloids.

Colloidal particles include inorganic colloids, such as, for example, clay particles, silicates, iron oxy-hydroxides and the like; organic colloids, such as proteins and humic substances; and even living material, including but not limited to bacteria, fungi, archaea, algae, protozoa, and the like. In some cases, the adherence of colloidal living material, including but not limited to bacteria, fungi, archaea, algae, protozoa, and the like, including proteins and by-products produced by such living material, together and to a surface results in a matrix or film known as a biofilm. In the industrial sector, biofilms cause corrosion, reduce heat exchange in exchangers and give rise to flow resistance in tubes and pipes. In the health sector, it is acknowledged that biofilm formation could be the source of many cases of nosocomial diseases, particularly if the biofilm fixes on surgical materials or in air conditioning or refrigeration systems.

Thus, there is an ongoing need for new or improved methods and compositions for reducing or preventing colloids adhesion and/or fouling.

WO 2018/226854 relates to antifouling polymer coatings and reverse coating method, and provides compositions that include a hydrogel and a liner, wherein a surface of the hydrogel dissociably-engages a surface of the liner.

WO 2018/017879 relates to zwitterionic microgels, zwitterionic microgel assemblies, their formulations and methods for their use.

WO 02/05643A2 relates to biocides, more particularly salicylanilide compositions, preferably substituted salicylanilide compositions, useful in biocide compositions, bacteria-reducing systems, biocide products and bacteria-reducing methods.

WO 2017/223544 relates to durable, anti-fouling, crosslinked zwitterionic coatings that are grafted to the surface of a substrate through covalent bonding.

## Summary of the Invention

In a first aspect, the present disclosure relates to a method for reducing or preventing colloids adhesion and/or fouling on a substrate in need thereof, the method comprising at least partially applying to the substrate an amount effective to reduce or prevent colloids adhesion and/or fouling a composition comprising a copolymer having repeating units derived from one or more zwitterionic monomers, typically one or more betaine monomers, and repeating units derived from one or more phosphorous acid monomers; thereby reducing or preventing the adhesion of colloids and/or fouling on the substrate.

In a second aspect, the present disclosure relates, in an embodiment, to an article comprising a metallic surface, wherein the metallicsurface is at least partially coated with a composition comprising a copolymer having repeating units derived from one or more zwitterionic monomers, typically one or more betaine monomers, and repeating units derived from one or more phosphorous acid monomers in an amount effective to reduce or prevent colloids adhesion and/or fouling to the metallic surface.

The present disclosure relates, in other embodiments, to an article comprising a silicate surface, a concrete surface or a plastic surface, wherein the silicate, concrete or plastic surface is at least partially coated with a composition comprising a copolymer having repeating units derived from one or more zwitterionic monomers, typically one or more betaine monomers, and repeating units derived from one or more phosphorous acid monomers in an amount effective to reduce or prevent colloids adhesion and/or fouling to the silicate, concrete or plastic surface.

In a third aspect, the present disclosure relates to use of a composition for reducing or preventing colloids

adhesion and/or fouling on a substrate, the composition comprising a copolymer having repeating units derived from one or more zwitterionic monomers, typically one or more betaine monomers, and repeating units derived from one or more phosphorous acid monomers.

In a fourth aspect, the present disclosure relates to a copolymer, used in the aforementioned method and use, having repeating units derived from one or more zwitterionic monomers, typically one or more betaine monomers, and repeating units derived from vinyl phosphonic acid (VPA).

**Detailed Description**

As used herein, the terms "a", "an", or "the" means "one or more" or "at least one" unless otherwise stated.

As used herein, the term "comprises" includes "consists essentially of" and "consists of." The term "comprising" includes "consisting essentially of" and "consisting of."

The present disclosure relates to method for reducing or preventing colloids adhesion and/or fouling on a substrate in need thereof, the method comprising at least partially applying to the substrate a composition comprising a copolymer having repeating units derived from one or more zwitterionic monomers, typically one or more betaine monomers, and repeating units derived from one or more phosphorous acid monomers in an amount effective to reduce or prevent colloids adhesion and/or fouling on the substrate.

As used herein, colloids refer to insoluble particles of a substance that are microscopically dispersed or suspended throughout another substance, typically an aqueous medium. Colloids and the substance in which they are dispersed or suspended throughout are collectively referred to as colloidal suspensions. Typically, the colloid does not settle or would take a very long time to settle appreciably. Colloidal particles include inorganic colloids, such as, for example, clay particles, silicates, iron oxy-hydroxides and the like; organic colloids, such as proteins and humic substances; and even living material, including but not limited to bacteria, fungi, archaea, algae, protozoa, and the like. In some cases, the adherence of colloidal living material, such as bacteria, fungi, archaea, algae, protozoa, and the like, including proteins and by-products produced by such living material, together and to a surface results in a matrix or film known as a biofilm. Exemplary bacteria include but are not limited to bacteria selected from the group consisting of: Pseudomonas spp., such as Pseudomonas aeruginosa, Azotobacter vinelandii, Escherichia coli, Corynebacterium diphteriae, Clostridium botulinum, Streptococcus spp., Acetobacter, Leuconostoc, Betabacterium, Pneumococcus, Mycobacterium tuberculosis, Aeromonas, Burkholderia, Flavobacterium, Salmonella, Staphylococcus, Vibrio spp., Listeria spp., and Legionella spp.

Fouling, in general, is the accumulation of unwanted material on solid surfaces to the detriment of function. Fouling is usually distinguished from other surface-growth phenomena in that it occurs on a surface of a component, system, or plant performing a defined and useful function, and that the fouling process impedes or interferes with this function. The colloids adhesion described herein may be considered fouling.

In accordance with the present disclosure, reducing colloids adhesion and/or fouling refers to decreasing the amount of colloids adhesion and/or fouling already on a surface. Preventing colloids adhesion and/or fouling refers to partial or complete inhibition of colloids adhesion and/or fouling on a surface. Prevention also includes slowing down colloids adhesion and/or fouling on a surface.

Without wishing to be bound to theory, the adhesion of colloids and general fouling is believed to be reduced and/or prevented by a physical mechanism of a repulsive barrier. The repulsive barrier is believed to be the result of the steric bulk of polymer chains, and the hydration layer formed around hydrophilic functions on the polymer chains of the copolymer used according to the present disclosure. For instance, bacteria cell walls are made of peptidoglycans, and they are hence also repelled by the respsulsive barrier, which results in less bacterial colonization on surfaces, and less formation of biofilm.

In an embodiment, the method for reducing or preventing colloids adhesion and/or fouling on a substrate in need thereof is a method for reducing or preventing biofilm adhesion on a substrate in need thereof.

As the steric bulk of polymer chains, and the hydration layer formed around hydrophilic functions on the polymer chains of the copolymer used, results in a repulsive barrier the presence of biocide is not required. In some embodiments, because biofilm formation is reduced or prevented by what is believed to be a repulsive barrier, the composition is free of biocide. In other embodiments, the composition contains some biocide. When biocide is present in the composition, it is generally in an amount not exceeding 1000 wt. %, preferably in an amount not exceeding 500 wt. % and more preferably in an amount not exceeding 250 wt. % of the copolymer.

Accordingly, the copolymer of the present disclosure is not a biocide.

The method described herein makes use of a composition comprising a copolymer having repeating units derived from one or more zwitterionic monomers, typically one or more betaine monomers, and repeating units derived from one or more phosphorous acid monomers. In an embodiment, the composition is free of vinylpyrrolidone homopolymer or copolymer.

The phrase "free of" means that there is no external addition of the material modified by the phrase and that

there is no detectable amount of the material that may be observed by analytical techniques known to the ordinarily-skilled artisan, such as, for example, gas or liquid chromatography, spectrophotometry, optical microscopy, and the like.

The step of at least partially applying to the substrate the composition comprising a copolymer having repeating units derived from one or more zwitterionic monomers, typically one or more betaine monomers, and repeating units derived from one or more phosphorous acid monomers described herein may be achieved using any method known to those of ordinary skill in the art. For example, the composition may be applied by spray coating, spin coating, gravure coating, curtain coating, dip coating, slot-die coating, rod or bar coating, doctor-blade coating, flowcoating, which involves controlled gravity flow of a coating over the substrate, or the like. Further examples include applying the composition onto a woven or nonwoven article and then contacting the woven or nonwoven article on the surface to be applied.

The pH of the composition is not particularly limited. Typically, the pH of the composition is from 6 to 8.

The copolymer of the present disclosure comprises repeating units derived from one or more zwitterionic monomers, typically one or more betaine monomers, and repeating units derived from one or more phosphorous acid monomers.

In an embodiment, the copolymer is a block copolymeror statistical copolymer.

In another embodiment, the copolymer is a statistical copolymer.

Unless otherwise indicated, when molar mass is referred to, the reference will be to the weight-average molar mass, expressed in g/mol. The latter can be determined by aqueous gel permeation chromatography (GPC) with light scattering detection (DLS or alternatively MALLS), with an aqueous eluent or an organic eluent (for example dimethylacetamide, dimethylformamide, and the like), depending on the copolymer. There is no particular limitation to the molar mass of the copolymer. However, the weight-average molar mass (Mw) of the copolymer is in the range of from about 5,000 to about 3,000,000 g/mol, typically from about 8000 to about 1,000,000, g/mol, more typically from about 10,000 to 500,000 g/mol, even more typically 20,000 to 200,000 g/mol.

The copolymer of the present disclosure comprises repeating units derived from one or more zwitterionic monomers. As used herein, zwitterionic monomers refer to monomers capable of polymerization that are neutral in overall charge but contain a number of cationic (positive) charges equal to the number of anionic (negative charges). The cationic charge(s) may be contributed by one or more onium or inium cations of nitrogen, such as ammonium, pyridinium and imidazolinium cations; phosphorus, such as phosphonium; and/or sulfur, such as sulfonium. The anionic charge(s) may be contributed by one or more carbonate, sulfonate, phosphate, phosphonate, phosphinate or ethenolate anions, and the like. Suitable zwitterionic monomers include, but are not limited to, betaine monomers, which are zwitterionic and comprise an onium atom that bears no hydrogen atoms and that is not adjacent to the anionic atom.

In an embodiment, the repeating units derived from one or more zwitterionic monomers are repeating units derived from one or more betaine monomers selected from the group consisting of:

a) alkyl sulfonates or phosphonates of dialkylammonium alkyl acrylates or methacrylates, acrylamido or methacrylamido, typically

- sulfopropyldimethylammonioethyl methacrylate,
- sulfoethyldimethylammonioethyl methacrylate,
- sulfobutyldimethylammonioethyl methacrylate,
- sulfohydroxypropyldimethylammonioethyl methacrylate,
- sulfopropyldimethylammoniopropylacrylamide,
- sulfopropyldimethylammoniopropylmethacrylamide,
- sulfohydroxypropyldimethylammoniopropyl(meth)acrylamide,
- sulfopropyldiethylammonioethyl methacrylate;

b) heterocyclic betaine monomers, typically

- sulfobetaines derived from piperazine,
- sulfobetaines derived from 2-vinylpyridine and 4-vinylpyridine, more typically 2- vinyl-1-(3-sulfopropyl)pyridinium betaine or 4-vinyl-1-(3-sulfopropyl)pyridinium betaine,
- 1vinyl-3-(3-sulfopropyl)imidazolium betaine;

c) alkyl or hydroxyalkyl sulfonates or phosphonates of dialkylammonium alkyl allylics, typically sulfopropylmethyldiallylammonium betaine;

d) alkyl or hydroxyalkyl sulfonates or phosphonates of dialkylammonium alkyl styrenes;

e) betaines resulting from ethylenically unsaturated anhydrides and dienes;

f) phosphobetaines of formulae

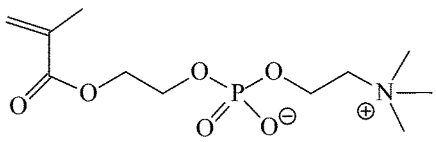

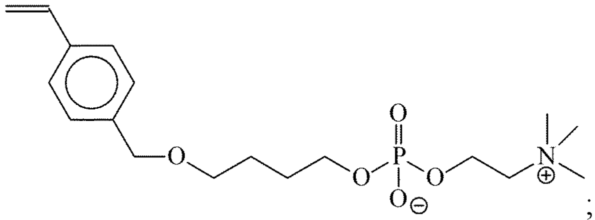
;

and

g) betaines resulting from cyclic acetals, typically ((dicyanoethanolate)ethoxy)dimethylammoniopropylmethacrylamide.

In another embodiment, the repeating units derived from one or more zwitterionic monomers are repeating units derived from one or more betaine monomers selected from the group consisting of:

- sulfopropyldimethylammonioethyl (meth)acrylate,
- sulfoethyldimethylammonioethyl (meth)acrylate,
- sulfobutyldimethylammonioethyl (meth)acrylate,
- sulfohydroxypropyldimethylammonioethyl (meth)acrylate,
- sulfopropyldimethylammoniopropylacrylamide,
- sulfopropyldimethylammoniopropylmethacrylamide,
- sulfohydroxypropyldimethylammoniopropyl(meth)acrylamide, and
- sulfopropyldiethylammonioethyl methacrylate.

Still in another embodiment, the repeating units derived from one or more zwitterionic monomers are repeating units derived from one or more betaine monomers selected from the group consisting of:
sulfohydroxypropyldimethylammonioethyl (meth)acrylamide and sulfopropyldimethylammonioethyl (meth)acrylate.

The copolymer of the present disclosure also comprises repeating units derived from one or more phosphorous acid monomers. The phosphorous acid monomers may be in the acid form or as a salt of the phosphorous acid groups.

According to the invention, the repeating units derived from one or more phosphorous acid monomers are repeating units derived from vinyl phosphonic acid.

In an embodiment, the repeating unit derived from one or more zwitterionic monomers are repeating units derived from sulfopropyldimethylammonioethyl methacrylate (SPE) and the repeating units derived from one or more phosphorous acid monomers are repeating units derived from vinyl phosphonic acid (VPA).

Still in another embodiment, the repeating unit derived from one or more zwitterionic monomers are repeating units derived from sulfohydroxypropyldimethylammoniopropylacrylamide (AHPS) and the repeating units derived from one or more phosphorous acid monomers are repeating units derived from vinyl phosphonic acid (VPA).

The copolymer comprises up to 90 mol%, typically less than 70 mol%, more typically less than 50 mol% and even more typically less than 30 mol% of repeating units derived from phosphorous acid monomers, based on the molar composition of the copolymer. In an embodiment, the copolymer comprises about 1 mol% to about 20 mol%, typically about 5 mol% to about 10 mol% of repeating units derived from phosphorous acid monomers, based on the molar composition of the copolymer.

More specifically, the copolymer comprises up to 90 mol%, typically less than 70 mol%, more typically less than 50 mol% and even more typically less than 30 mol% of repeating units derived from vinyl phosphonic acid, based on the molar composition of the copolymer. In an embodiment, the copolymer comprises about 1 mol% to about 20 mol%, typically about 5 mol% to about 10 mol% of repeating units derived from vinyl phosphonic acid, based on the molar composition of the copolymer.

The copolymer comprises greater than 30 mol%, typically greater than 50 mol%, more typically greater than 70 mol%, even more typically greater than 90 mol%, of repeating units derived from the one or more zwitterionic monomers, based on the molar composition of the copolymer. In an embodiment, the copolymer comprises about 80 mol% to about 99 mol%, typically about 90 mol% to about 95 mol% of repeating units derived from the one or more zwitterionic

monomers, based on the molar composition of the copolymer.

In some embodiments, the copolymer of the present disclosure comprises, in addition to repeating units derived from zwitterionic monomers and repeating units derived from phosphorous acid monomers, repeating units derived from other monomers. Generally, the other monomers are selected from (meth)acrylates and (meth)acrylamides.

Preferably, the other monomers are selected from the list consisting of 2-hydroxyethyl methacrylate (HEMA), hydroxypropyl methacrylate, 2-hydroxyethyl acrylate (HEA), hydroxypropyl acrylate, 4-hydroxybutyl acrylate, poly(ethylene glycol) methacrylate (PEGMA), poly(ethylene glycol) methyl ether methacrylate, poly(ethylene glycol) ethyl ether methacrylate, poly(ethylene glycol) methyl ether acrylate and poly(ethylene glycol) ethyl ether acrylate. Good results were obtained with 2-hydroxyethyl methacrylate (HEMA) and 2-hydroxyethyl acrylate (HEA).

In some embodiments, the copolymer of the present disclosure comprises repeating units derived from sulfopropyldimethylammonioethyl methacrylate (SPE), repeating units derived from vinyl phosphonic acid (VPA) and repeating units derived from monomers selected from the list consisting of HEMA, HEA and poly(ethylene glycol) methyl ether methacrylate (mPEGMA).

In some other embodiments, the copolymer of the present disclosure comprises repeating units derived from sulfohydroxypropyldimethylammoniopropylacrylamide (AHPS), repeating units derived from vinyl phosphonic acid (VPA) and repeating units derived from monomers selected from the list consisting of HEMA, HEA and poly(ethylene glycol) methyl ether methacrylate (mPEGMA).

When, the copolymer of the present disclosure comprises, in addition to repeating units derived from zwitterionic monomers and repeating units derived from phosphorous acid monomers, repeating units derived from other monomers, the copolymer comprises about 1 mol% to about 20 mol%, typically about 3 mol% to about 15 mol% and more typically about 5 mol% to about 10 mol% of repeating units derived from phosphorous acid monomers, based on the molar composition of the copolymer. Besides, the copolymer comprises about 80 mol% to about 99 mol%, typically about 90 mol% to about 95 mol% of repeating units derived from the one or more zwitterionic monomers and from the other monomers, based on the molar composition of the copolymer. The molar ratio of repeating units derived from the one or more zwitterionic monomers with repeating units derived from the other monomers ranges typically from 0.25 to 4, more typically from 0.5 to 2.

The copolymer of the present inventionis obtained by radical polymerization or copolymerization or controlled radical polymerization in aqueous solution, in dispersed media of zwitterionic monomers, typically betaine monomers, containing at least one double bond-containing group with phosphorous acid monomers in which at least one of the hydrogen atoms has been replaced with a double bond-containing organic group. The zwitterionic monomers and phosphorous acid monomers may be obtained from commercial sources or synthesized according to methods known to those of ordinary skill in the art.

Suitable zwitterionic monomers include, but are not limited to, betaine monomers selected from the group consisting of:

a) alkyl or hydroxyalkyl sulfonates or phosphonates of dialkylammonium alkyl acrylates or methacrylates, acrylamido or methacrylamido, typically:

- sulfopropyldimethylammonioethyl methacrylate, sold by Raschig under the name SPE:

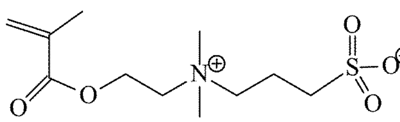

(SPE)

- sulfoethyldimethylammonioethyl methacrylate,

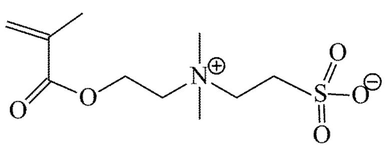

- sulfobutyldimethylammonioethyl methacrylate:

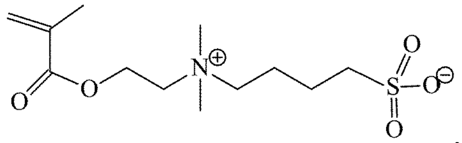

,

the synthesis of which is described in the paper "Sulfobetaine zwitterionomers based on n-butyl acrylate and 2-ethoxyethyl acrylate: monomer synthesis and copolymerization behavior", Journal of Polymer Science, 40, 511-523 (2002),

- sulfohydroxypropyldimethylammonioethyl methacrylate,

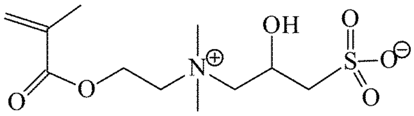

- sulfopropyldimethylammoniopropylacrylamide,
  the synthesis of which is described in the paper "Synthesis and solubility of the poly(sulfobetaine)s and the corresponding cationic polymers: 1. Synthesis and characterization of sulfobetaines and the corresponding cationic monomers by nuclear magnetic resonance spectra", Wen-Fu Lee and Chan-Chang Tsai, Polymer, 35 (10), 2210-2217 (1994),
- sulfopropyldimethylammoniopropylmethacrylamide, sold by Raschig under the name SPP:

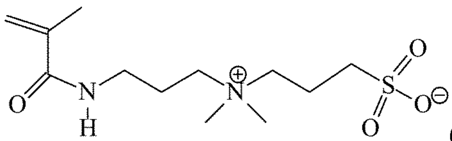

(SPP)

- sulfohydroxypropyldimethylammoniopropylmethacrylamide:

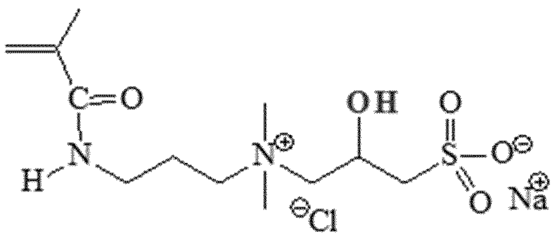

(SHPP)

- sulfohydroxypropyldimethylammoniopropylacrylamide (or 3-((3-acrylamidopropyl)dimethylammonio)-2-hydroxypropane-1-sulfonate):

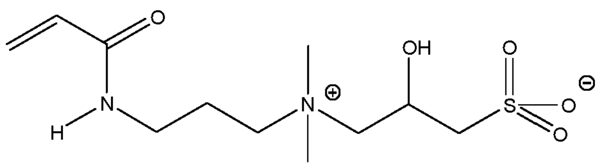

(AHPS)

- sulfopropyldiethylammonio ethoxyethyl methacrylate:

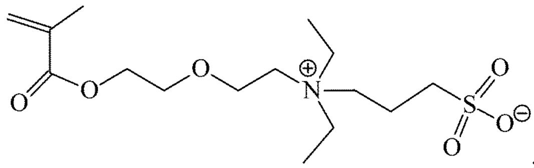

,

the synthesis of which is described in the paper "Poly(sulphopropylbetaines):

1. Synthesis and characterization", V. M. Monroy Soto and J. C. Galin, Polymer, 1984, Vol. 25, 121-128;

b) heterocyclic betaine monomers, typically:

- sulfobetaines derived from piperazine having any one of the following structures

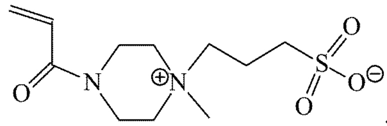

,

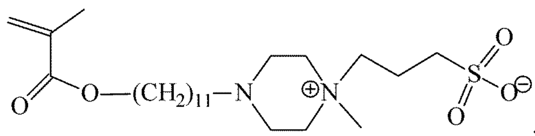

,

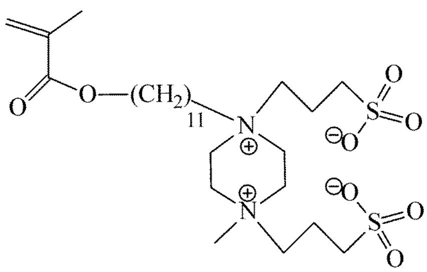

,

the synthesis of which is described in the paper "Hydrophobically Modified Zwitterionic Polymers: Synthesis, Bulk Properties, and Miscibility with Inorganic Salts", P. Koberle and A. Laschewsky, Macromolecules, 27, 2165-2173 (1994),

- sulfobetaines derived from 2-vinylpyridine and 4vinylpyridine, such as 2-vinyl-1-(3-sulfopropyl)pyridinium betaine (2SPV), sold by Raschig under the name SPV:

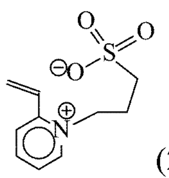

(2SPV),

and 4-vinyl-1-(3-sulfopropyl)pyridinium betaine (4SPV),

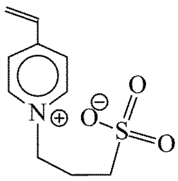

(4SPV),

the synthesis of which is disclosed in the paper "Evidence of ionic aggregates in some ampholytic polymers by transmission electron microscopy", V. M. Castaño and A. E. González, J. Cardoso, O. Manero and V. M. Monroy, J. Mater. Res., 5 (3), 654-657 (1990),

- 1-vinyl-3-(3-sulfopropyl)imidazolium betaine:

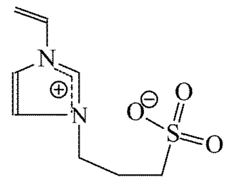

,

the synthesis of which is described in the paper "Aqueous solution properties of a poly(vinyl imidazolium sulphobetaine)", J. C. Salamone, W. Volkson, A.P. Oison, S.C. Israel, Polymer, 19, 1157-1162 (1978),

c) alkyl or hydroxyalkyl sulfonates or phosphonates of dialkylammonium alkyl allylics, typically sulfopropylmethyldiallylammonium betaine:

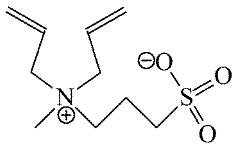

,

the synthesis of which is described in the paper "New poly(carbobetaine)s made from zwitterionic diallylammonium monomers", Favresse, Philippe; Laschewsky, Andre, Macromolecular Chemistry and Physics, 200(4), 887-895 (1999),

d) alkyl or hydroxyalkyl sulfonates or phosphonates of dialkylammonium alkyl styrenes, typically compounds having any one of the following structures:

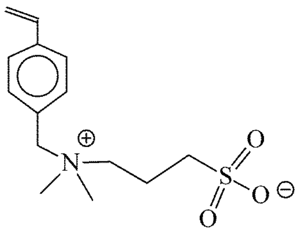

,

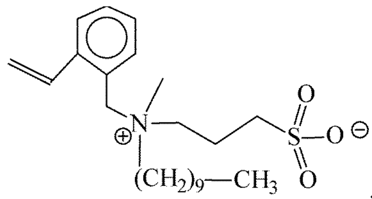

,

the synthesis of which is described in the paper "Hydrophobically Modified Zwitterionic Polymers: Synthesis, Bulk Properties, and Miscibility with Inorganic Salts", P. Koberle and A. Laschewsky, Macromolecules, 27, 2165-2173 (1994),

e) betaines resulting from ethylenically unsaturated anhydrides and dienes, typically compounds having any one of the following structures:

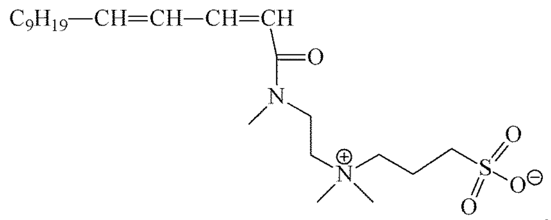

,

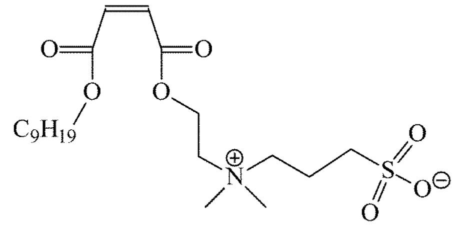

,

the synthesis of which is described in the paper "Hydrophobically Modified Zwitterionic Polymers: Synthesis, Bulk Properties, and Miscibility with Inorganic Salts", P. Koberle and A. Laschewsky, Macromolecules, 27, 2165-2173 (1994),

f) phosphobetaines having any one of the following structures:

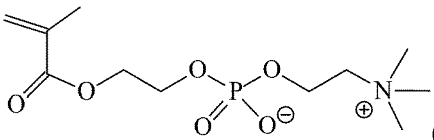

(MPC),

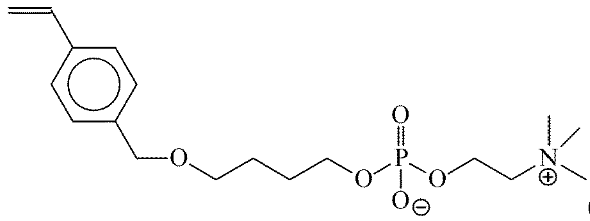

(VPC),

the synthesis of which are disclosed in EP 810 239 B1 (Biocompatibles, Alister et al.);

g) betaines resulting from cyclic acetals, typically ((dicyanoethanolate)ethoxy)dimethylammoniumpropylmethacrylamide:

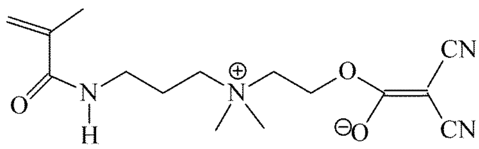

,

the synthesis of which is described by M-L. Pujol-Fortin et al. in the paper entitled "Poly(ammonium alkoxydicyanatoethenolates) as new hydrophobic and highly dipolar poly(zwitterions). 1. Synthesis", Macromolecules, 24, 4523-4530 (1991).

In another embodiment, one or more zwitterionic monomers are one or more betaine monomers selected from the group consisting of:

- sulfopropyldimethylammonioethyl methacrylate,
- sulfoethyldimethylammonioethyl methacrylate,

- sulfobutyldimethylammonioethyl methacrylate,
- sulfohydroxypropyldimethylammonioethyl methacrylate,
- sulfopropyldimethylammoniopropylacrylamide,
- sulfopropyldimethylammoniopropylmethacrylamide,
- sulfohydroxypropyldimethylammoniopropyl(meth)acrylamide, and
- sulfopropyldiethylammonioethyl methacrylate.

According to the invention, the copolymer is obtained by radical polymerization or copolymerization using a radical initiator, such as 2,2'-azobis(2-methylbutyronitrile).

The composition according to the present disclosure may comprise optional ingredients to facilitate application of the composition onto the substrate and/or to provide additional benefits. Optional ingredients include, but are not limited to, crosslinking agents, chelating agents, sequestering or scale-inhibiting agents, bleaching agents, fillers, bleaching catalysts, pH adjusting agents, viscosity modifiers, co-solvents, antifoaming agents, enzymes, fragrances, colorants, anti-corrosion agents, preservatives, optical brighteners, opacifying or pearlescent agents, and the like.

In the method according to the present disclosure, the composition is applied to the substrate in an amount effective to reduce or prevent colloids adhesion and/or fouling. As used herein, the amount effective to reduce or prevent colloids adhesion and/or fouling in absolute numbers depends on factors including the colloids and/or fouling to be reduced or prevented; whether the aim is prevention or reduction; the contact time between the copolymer and the surface; other optional ingredients present, and also the surface or aqueous environment in question. In an embodiment, the amount effective to reduce or prevent colloids adhesion and/or fouling is such that the copolymer is deposited on the substrate in an amount from 0.0001 to 100 $mg/m^2$, typically from 0.001 to 50 $mg/m^2$, of the surface applied.

It has been discovered, surprisingly, that the copolymer having repeating units derived from one or more zwitterionic monomers, typically one or more betaine monomers, and repeating units derived from one or more phosphorous acid monomers described herein adsorbs strongly onto metal surfaces, forming the aforementioned repulsive barrier that is believed to be the result of the steric bulk of polymer chains, and the hydration layer formed around hydrophilic functions on the polymer chains of the copolymer. Accordingly, the substrate, typically in need of reduction or prevention of colloids adhesion and/or fouling is a metal or metal-containing substrate. Typically, the metal is selected from the group consisting of iron, cast iron, copper, brass, aluminum, titanium, carbon steel, stainless steel, and alloys thereof.

It has been discovered, surprisingly, that the copolymer of the present disclosure adsorbs strongly onto silicate surfaces, forming the aforementioned repulsive barrier that is believed to be the result of the steric bulk of polymer chains, and the hydration layer formed around hydrophilic functions on the polymer chains of the copolymer. Accordingly, another substrate, typically in need of reduction or prevention of colloids adhesion and/or fouling is a silicate substrate.

As used herein, the term "silicate" refers to any mineral or ionic solid having silicon atoms each bonded to one or more oxygen atoms, typically 2 to 4 oxygen atoms per silicon atom. The silicate may further comprise atoms of other elements, for example, transition metal elements and elements from groups IA to IIIA of the periodic table of the elements.

The silicate may be a crystalline silicate or amorphous silicate.

Suitable crystalline silicates may be selected from the group consisting of nesosilicates, sorosilicates, cyclosilicates, tectosilicates, inosilicates, and mixtures thereof.

Examples of nesosilicates include, but are not limited to, olivine [$(Mg,Fe)_2SiO_4$], forsterite ($Mg_2SiO_4$), fayalite ($Fe_2SiO_4$), alite [$Ca_3((SiO_4)O)$], belite ($Ca_2SiO_4$), andalousite, sillimanite and kyanite [all three are of formula $Al_2O(SiO_4)$], phenakite, topaz and thaumasite.

Exemplary of sorosilicates are prehnite, hemimorphite [$Zn_4(Si_2O_7)(OH)_2$] and compounds of formula $CaMg(Si_2O_7)$.

Cyclosilicates refer to silicates with tetrahedrons that usually link to form rings of three $(Si_3O_9)^{-6}$, four $(Si_4O_{12})^{-8}$, six $(Si_6O_{18})^{-12}$ or nine $(Si_9O_{27})^{-18}$ units, and include, for example, beryl.

Examples of tectosilicates include, but are not limited to, quartz, cristobalite, tridymite, orthose [$K(AlSi_3O_8)$], anorthite [$Ca(Al_2Si_2O_8)$] and celsiane [$Ba(Al_2Si_2O_8)$].

Inosilicates refer to silicates generally having a crystalline structure in the form of chains. Inosilicates include pyroxenes, which have a crystalline structure usually in the form of simple chains $(SiO_3)^{-2}$, and amphiboles, which have a crystalline structure usually in the form of double chains $(Si_4O_{11})^{-6}$.

Examples of pyroxenes include, but are not limited to, diopside [$CaMg(SiO_3)_2$], spodumene [$LiAl(SiO_3)_2$], wollastonite [$Ca(SiO_3)$], enstatite [$Mg(SiO_3)$], hypersthene, hedenbergite, augite, pectolite, diallage, fassaite, spodumene, jeffersonite, aegirine, omphafacite and hiddenite.

Suitable examples of amphiboles include, but are not limited to, calcium amphiboles such as tremolite [$Ca_2Mg_5[Si_4On,(OH,F)]_2$], actinote [$Ca_2(Mg,Fe)_5[Si_4O_{11},OH]_2$] and hornblende, iron-magnesium amphiboles such as grunerite and cummingtonite, and sodium amphiboles such as glaucophane, arfvedsonite, and riebeckite.

Other suitable crystalline silicates include, but are not limited to, barium silicates, such as $BaSiO_3$ (barium

metasilicate), $Ba_2Si_3O_7$ (barium disilicate), and $Ba_2SiO_4$ (dibarium silicate); calcium silicates, such as $CaSiO_3$ (monocalcium silicate or wollastonite), $Ca_2SiO_4$ (dicalcium silicate), and $Ca_3SiO_5$ (tricalcium silicate); magnesium silicates, such as $MgSiO_3$ (enstatite), $Mg_2SiO_4$ (forsterite); aluminum silicates (also "aluminosilicates"), such as halloysite ($Al_2Si_2O_5(OH)_4$), kaolinite ($Al_2Si_2O_5(OH)_4$), mullite (aka porcelainite, $Al_6Si_2O_{13}$), muscovite ($KAl_2(AlSi_3)O_{10}(OH)_2$), sanidine (KAlSisOs), albite (NaAlSisOs) and anorthite ($CaAl_2Si_2O_8$).

Many crystalline silicates useful for the present invention are ceramics. The crystallinity of silicate ceramics may vary to a large extent, from highly oriented to semi-crystalline, vitrified. Often, fired ceramics are either vitrified or semi-vitrified as is the case with earthenware, stoneware, and porcelain.

Among silicate ceramics of interest for the present invention, mention may be made of:

- kaolin and/or clay-based ceramics, the composition of which lies generally in the mullite field in the ternary raw material diagram kaolin/clay-feldspar-quartz (system $K_2O$-$Al_2O_3$-$SiO_2$), including:

  - porcelains (except dental porcelain), such as (i) hard porcelain containing typically about 50% kaolin -which can be partly replaced by clay- , about 25 % quartz and about 25% feldspar, (ii) soft porcelain, (iii) bone china, (iv) frit porcelain and (v) electrochemical porcelain useful for insulators,
  - earthenwares, such as faience, majolika and terracotta,
  - stonewares, such as coarse stonewares notably useful for sewer pipes, and dense, vitrified stonewares useful for e.g. chemical vessels, and
  - bricks,

- dental porcelain, the composition or which lies in the leucite field in the ternary raw material diagram kaolin/clay-feldspar-quartz, having generally a high feldspar content (typically about 80%) and a low kaolin content (typically less than about 5%),
- magnesium silicates, including talc-based ceramics which are typically based on the ternary phase diagram $MgO$-$Al_2O_3$-$SiO_2$, such as steatite, cordierite and forsterite ceramics, and
- zircon-based ceramics for electrical insulators,
- ceramics in the system $Li_2O$-$Al_2O_3$-$SiO_2$, which have generally low-thermal expansion.

Silicate ceramics in accordance with the invention may be coarse or fine and, according to water absorption, dense (< 2 % for fine and < 6 % for coarse) or porous ceramics (> 2% and > 6 %, respectively).

An amorphous silicate suitable for use according to the present disclosure is glass.

Among silicate glasses of interest for the present invention, mention may be made of:

- fused quartz, also known as fused-silica glass or vitreous-silica glass, which is silica ($SiO_2$) in vitreous or glass form ; it is notably useful for high-temperature applications such as furnace tubes, lighting tubes, melting crucibles, etc.
- soda-lime-silica glass, also known as window glass, which comprises silica ($SiO_2$), soda ($Na_2O$) and lime ($CaO$); soda-lime-silica glass often further comprises one or more additional components, usually in a low amount, in particular $Al_2O_3$, $K_2O$ and $MgO$ ; an exemplary soda-lime-silica glass composition is or comprises from 63 % to 81% SiO2, from 9% to 18% $Na_2O$, from 7% to 14% $CaO$, from 0 % to 1.5 % $K_2O$, from 0 % to 8 % $MgO$ and from 0% to 3% of $Al_2O_3$ ; soda-lime-silica glass is notably useful for some low-temperature incandescent light bulbs etc.
- borosilicate glass, which comprises silica ($SiO_2$) and boron trioxide ($B_2O_3$) ; borosilicate glass often further comprises one or more additional components, usually in a low amount, in particular $Na_2O$, $K_2O$, $CaO$, $MgO$ and $Al_2O_3$ ; a first exemplary borosilicate glass composition (Pyrex™-type) is or comprises from 65% to 85% of $SiO_2$, from 7% to 15% of $B_2O_3$, from 3% to 9 % of $Na_2O$, from 0.5% to 7% of $Al_2O_3$, from 0% to 3% $K_2O$, from 0% to 8% of $CaO$ and from 0% to 1% $MgO$; another exemplary borosilicate glass composition is or comprises from 45% to 75% of $SiO_2$, from 2% to 10% of $B_2O_3$, from 5% to 30% of $CaO$, from 0% to 12% of $Al_2O_3$, from 0% to 20% of $Na_2O$, from 0% to 2% $K_2O$ and from 0% to 15% $MgO$ ; borosilicate glass is notably useful for chemical glassware like reagent bottles, car head lamps and optical components ;
- lead glass, also known as crystal glass or lead-oxide glass, which comprises silica ($SiO_2$) and lead oxide ($PbO$) ; lead glass may further contain notably $B_2O_3$, $Al_2O_3$, $MgO$, $ZnO$ and $ZrO_2$ ; lead glass may contain or be free of alkali oxide (such as $K_2O$ and $Na_2O$) ;
- aluminosilicate glass, which comprises silica and alumina ; aluminosilicate glass often further comprises one or more additional components, usually in a low amount, in particular $CaO$, $MgO$, $BaO$, $B_2O_3$, $SrO$, $Na_2O$ and $K_2O$ ; an exemplary aluminosilicate glass composition is or comprises from 45% to 75% $SiO_2$, from 5% to 30% $Al_2O_3$, from 10% to 35% of one or more alkaline earth metal oxide(s) and up to 5% of other components such as alkali metal oxides ; and
- germanium-oxide glass, which comprises silica, alumina and germanium dioxide ($GeO_2$).

As used herein, the term "silicate substrate" refers to any material comprising or consisting of one or more silicates as defined herein. Suitable silicate substrates include, but are not limited to, ceramic substrates (including porcelain substrates) and glass substrates. In an embodiment, the silicate substrate is a glass substrate.

It has also been discovered, surprisingly, that the copolymer of the present disclosure adsorbs strongly onto concrete surfaces, forming the aforementioned repulsive barrier that is believed to be the result of the steric bulk of polymer chains, and the hydration layer formed around hydrophilic functions on the polymer chains of the copolymer. Accordingly, another substrate, typically in need of reduction or prevention of colloids adhesion and/or fouling is a concrete substrate.

By concrete is meant a composite material that consists essentially of a binding medium, such as a mixture of hydraulic cement and water, which forms a cement matrix within which are embedded particles or fragments of aggregate, usually a combination of fine and coarse aggregate.

By hydraulic cements is meant cements which set and harden to form a stone-like mass by reacting with water. They comprise Portland cements and blended cements which are combinations of Portland cement with a pozzolan or a blast-furnace slag.

Generally, aggregates have a particle size distribution in the range of 0.01-100 mm. Fine aggregate such as sand comprises particles up to 4-5 mm in diameter while coarse aggregate such as gravel comprises particles with diameter larger than 5 mm.

In some embodiments, aggregate is essentially composed of fine aggregate such as sand. Accordingly, the aggregate comprises less than 1 wt % of coarse aggregate based on the total weight of aggregate.

Generally, the cement matrix constitutes from 10 % to 50 % of the volume of concrete; typically from 15 % to 40 % and more typically from 20 % to 35%.

Besides, the aggregates generally constitutes from 50 % to 85 % of the volume of concrete; typically from 55 % to 80 % and more typically from 60 % to 75 %.

In some embodiments, the concrete comprises well known admixtures such as setting and hardening admixtures, workability admixtures, and porosity admixtures.

It has also been discovered, surprisingly, that the copolymer of the present disclosure adsorbs strongly onto plastic surfaces, forming the aforementioned repulsive barrier that is believed to be the result of the steric bulk of polymer chains, and the hydration layer formed around hydrophilic functions on the polymer chains of the copolymer. Accordingly, another substrate, typically in need of reduction or prevention of colloids adhesion and/or fouling is a plastic substrate. Typically, the plastic substrate is selected from the group consisting of polyethers, polyesters such as polyethylene terphtalate (PET) or polybutylene terphtalate (PBT), polycarbonates such as bisphenol A polycarbonate, styrenic polymers such as poly(styreneacrylonitrile) (SAN) or poly(acrylonitrile-butadiene-styrene) (ABS), poly(meth)acrylate such as polymethylmethacrylate (PMMA), polyamides, polysulfones such as polysulfone (PSU), polyethersulfone (PESU) or polyphenysulfone (PPSU), polyether ether ketone (PEEK), polyaryletherketone (PAEK), polypolyethylene (PE), polypropylene (PP) and polyvinylchloride (PVC).

The substrate used according to the present disclosure is in contact with an aqueous medium. Herein, "aqueous medium" refers to a medium comprising or consisting of water. The aqueous medium may further comprise colloidal particles. Colloidal particles include inorganic colloids, such as, for example, clay particles, silicates, iron oxy-hydroxides and the like; organic colloids, such as proteins and humic substances; and colloidal living material, such as bacteria, fungi, archaea, algae, protozoa, and the like.

In an embodiment, the aqueous medium is selected from the group consisting of hydrotest water, oil and gas gathering waters, condensed waters, oil and gas production waters, fracturing waters, wash waters, food wash waters, metal degreasing fluids, deck fluids, water in oil and gas reservoirs, water in sump tanks, water in drains, and water in cooling towers.

Accordingly, the present disclosure is also directed to an article comprising a metal or metal-containing surface, wherein the metal or metal-containing surface is at least partially coated with a composition comprising a copolymer having repeating units derived from one or more zwitterionic monomers, typically one or more betaine monomers, and repeating units derived from one or more phosphorous acid monomers in an amount effective to reduce or prevent colloids adhesion and/or fouling to the metal or metal-containing surface.

In an embodiment, the article is a pipeline, a methane terminal; a medical device, typically medical tubing, orthopedic article, implantable device, drape, biosensor, dental implant, mechanical heart valve, extra-corporeal blood vessel, stent, or surgical tool; part of a heating and/or cooling system, typically heat exchanger, steam condenser, wet tower, or cooling tower; household equipment, a food contact surface, industrial equipment, degreasing tank bath or architectural feature.

In another aspect, the present disclosure is also directed to an article comprising a silicate surface, wherein the silicate surface is at least partially coated with a composition comprising a copolymer having repeating units derived from one or more zwitterionic monomers, typically one or more betaine monomers, and repeating units derived from one or more phosphorous acid monomers in an amount effective to reduce or prevent colloids adhesion and/or fouling

to the silicate surface.

In an embodiment, the article is a ceramic electronic component, typically an insulator, wiring board, capacitor, or spacer oxide; ceramic (esp. porcelain) filter; heating apparatus, typically a hot plate or immersion heater; ceramic pipes; medical or dental implants; ceramic (esp. porcelain) tools or molds.

In another embodiment, the article is silicate glass, glass panel e.g. architectural glass panel or solar panels; silicate paint, or fibers, typically insulation fibers.

Still in an other aspect, the present disclosure relates to an article comprising a concrete surface, wherein the concrete surface is at least partially coated with a composition comprising a copolymer having repeating units derived from one or more zwitterionic monomers, typically one or more betaine monomers, and repeating units derived from one or more phosphorous acid monomers in an amount effective to reduce or prevent colloids adhesion and/or fouling to the concrete surface.

In an embodiment, the article is concrete water storage tank.

Still in an other aspect, the present disclosure relates to an article comprising a plastic surface, wherein the plastic surface is at least partially coated with a composition comprising a copolymer having repeating units derived from one or more zwitterionic monomers, typically one or more betaine monomers, and repeating units derived from one or more phosphorous acid monomers in an amount effective to reduce or prevent colloids adhesion and/or fouling to the plastic surface.

In an embodiment, the article comprising a plastic surface is a medical device, typically medical tubing, sterilization trays, orthopedic article, dental instrument or surgical tool; part of a heating and/or cooling system wet tower, or cooling tower; industrial equipment, or architectural feature; waterproofing membrane, swimming pool membrane or liner.

The article of the present disclosure is prepared by the method described herein. The features of the method described herein apply to the article, mutatis mutandis. Thus, in an embodiment of the article, the composition is free of vinylpyrrolidone homopolymer or copolymer.

The present disclosure also relates to the use of a composition for reducing or preventing colloids adhesion and/or fouling on a substrate, the composition comprising a copolymer having repeating units derived from one or more zwitterionic monomers, typically one or more betaine monomers, and repeating units derived from one or more phosphorous acid monomers.

The substrate is typically in need of reduction or prevention of colloids adhesion and/or fouling.

The present disclosure also relates to a copolymer having repeating units derived from one or more zwitterionic monomers, typically one or more betaine monomers, and repeating units derived from vinyl phosphonic acid as previously described.

The methods and processes, including materials useful therefor, according to the present disclosure are further illustrated by the following non-limiting examples.

## Examples

### Example 1. Synthesis of a statistical copolymer poly(vinyl phosphonic acid-stat-SPE) (poly(VPA-stat-SPE)) by conventional radical polymerization (VPA = 10 mol% : SPE = 90 mol%)

In a 500 mL three-neck round-bottom flask equipped with a water condenser and a mechanical agitation, are introduced, 7 g of vinyl phosphonic acid (at 85.4% purity), 17.39 g of an aqueous solution of monomer SPE at 40 wt%, 24.01 g of an aqueous 2,2'-azobis(2-methylpropionamidine)dihydrochloride V50 solution at 5 wt% and 21.77 g of MilliQ water. The mixture was degassed and heated to 60 °C, the temperature at which the remaining 330.42 g of the aqueous SPE solution was introduced by continuous feeding over 8 hours. At the end of the feeding, the reaction was held at temperature for two more hours. At the end of the polymerization, a sample was taken for $^{1}H$ and $^{31}P$ NMR analysis to determine the SPE and VPA monomer conversions. A sample was also taken for Size Exclusion Chromatography with Multi-Angle Light Scattering (SEC-MALS) to determine the number average molar mass $M_n$, the weight average molar mass $M_w$ and the polydispersity. A final dilution was made to get a final solid content around 30 wt%.

VPA monomer conversion ($^{31}P$ NMR) = 89%
SPE monomer conversion ($^{1}H$ NMR) = 99.9%

$$\overline{M}_{n\,(SEC\text{-}MALS)} = 27{,}300\ g{\cdot}mol^{-1}$$

$$\overline{M}_{w\,(SEC\text{-}MALS)} = 101{,}000\ g{\cdot}mol^{-1}$$

$Đ = 3.7$

**Example 2. Synthesis of a statistical copolymer poly(vinyl phosphonic acid-stat-(3-((3-acrylamidopropyl)dimethylammonio)-2-hydroxypropane-1-sulfonate) (poly(VPA-stat-AHPS)) by conventional radical polymerization (initiator: 2,2'-Azobis(2-methylpropionamidine) dihydrochloride) V50 - VPA = 10 mol% - AHPS = 90 mol%)**

In a 500 mL kettle reactor equipped with a water condenser and a mechanical agitation, were introduced, at room temperature (22°C), 1 g (7.91 mmol) of a 85.4 wt% vinyl phosphonic acid aqueous solution, 41.89 g (71.15 mmol) of a 50 wt% AHPS aqueous solution and 175.09 g of distilled water. The mixture was degassed by bubbling nitrogen in the bulk for 50 minutes while the temperature in the solution was increased up to 60°C. After stabilization of the temperature at 60°C in the kettle reactor, 21.44g (7.91 mmol) of a 10 wt% V50 aqueous solution was introduced under a nitrogen blanket. Then, simultaneously 376.98 g (640.31 mmol) of a 50 wt% AHPS aqueous solution was continuously fed in 2 hours (flow rate = 3.14 $g{\cdot}min^{-1}$) and 9.0 g (71.1 mmol) of a 85.4 wt% VPA aqueous solution was continuously fed in 1 hour (flow rate = 0.15 $g{\cdot}min^{-1}$). After completion of the feeding, the reaction medium was stirred for an additional 2 hours at 60°C and then one more hour at 90°C.

At the end of the polymerization, a sample was taken for $^{1}H$ and $^{31}P$ NMR analysis to determine the AHPS and VPA monomer conversions. A sample was also taken for size exclusion chromatography analysis to determine the number average molar mass $M_n$, the weight average molar mass $M_w$ and the dispersity.

Results and methods:

VPA monomer conversion ($^{31}P$ NMR) > 99.9%
AHPS monomer conversion ($^{1}H$ NMR) > 99.9%
SEC samples were diluted in a mobile phase (1M $NH_4NO_3$, 100 ppm of $NaN_3$) and filtered (0.45 μm Millipore) before analyzing.

The samples were analyzed by SEC MALS according to conditions below:

- Eluant: 1M $NH_4NO_3$, 100 ppm of $NaN_3$ in MilliQ water
- Flow rate: 1 mL/min
- Columns: Shodex OHpak SB 806M HQ (3*30cm)
- Detection: RI (Agilent detector)
- Samples concentration: 5 mg/mL in the mobile phase
- Injection volume: 100 μL

$$\overline{M}_{n\,(\text{SEC-MALS})} = 7{,}200\ g{\cdot}mol^{-1}$$

$$\overline{M}_{n\,(\text{SEC-MALS})} = 21{,}000\ g{\cdot}mol^{-1}$$

$Đ = 2.9$

**Example 3. Synthesis of a statistical copolymer poly(vinyl phosphonic acid-stat-3-((3-acrylamidopropyl)dimethylammonio)-2-hydroxypropane-1-sulfonate)-stat-2-hydroxyethyl acrylate) (poly(VPA-stat-AHPS-stat-HEA)) by conventional radical polymerization (initiator: 2,2'-Azobis(2-methylpropionamidine) dihydrochloride) V50 - VPA = 10 mol% - AHPS = 30 mol% - HEA = 60 mol%)**

In a 500 mL kettle reactor equipped with a water condenser and a mechanical agitation, were introduced, at room temperature (22°C), 13 g (102.8 mmol) of a 85.4 wt% vinyl phosphonic acid aqueous solution, 9.08 g (15.4 mmol) of a 50 wt% AHPS aqueous solution, 4.59 g (30.8 mmol) of a 78 wt% HEA aqueous solution and 130.01 g of distilled water. The mixture was degassed by bubbling nitrogen in the bulk and the temperature in the solution was increased up to 60°C over 50 minutes. Once the temperature in the kettle reactor was stabilized at 60°C, 27.9 g (10.3 mmol) of a 10 wt% V50 aqueous solution was introduced under a nitrogen blanket. Then, in parallel, 172.43 g (292.9 mmol) of a 50 wt% AHPS aqueous solution and 87.2 g (585.7 mmol) of a 78 wt% HEA aqueous solution were continuously fed over 8 hours (AHPS flow rate = 0.359 $g{\cdot}min^{-1}$; HEA flow rate = 0.182 $g.min^{-1}$). After completion of the feeding, the reaction

medium was stirred for an additional 2 hours at 60°C followed by one more hour at 90°C.

At the end of the polymerization, a sample was taken for $^1H$ and $^{31}P$ NMR analysis to determine the AHPS, the HEA and the VPA monomer conversions.

Results:

VPA monomer conversion ($^{31}P$ NMR) > 99.9%
AHPS monomer conversion ($^1H$ NMR) > 99.9%
HEA monomer conversion ($^1H$ NMR) > 99.9%

**Example 4. Synthesis of a statistical copolymer poly(vinyl phosphonic acid-stat-3-((3-acrylamidopropyl)dimethylammonio)-2-hydroxypropane-1-sulfonate-stat-2-hydroxyethyl methacrylate) (poly(VPA-stat-AHPS-stat-HEMA)) in the present invention by conventional radical polymerization (initiator: 2,2'-Azobis(2-methylpropionamidine) dihydrochloride) V50 - VPA = 10 mol% - AHPS = 60 mol% - HEMA = 30 mol%)**

In a 500 mL kettle reactor equipped with a water condenser and a mechanical agitation, were introduced, at room temperature (22°C), 13 g (102.8 mmol) of a 85.4 wt% vinyl phosphonic acid aqueous solution and 136.2 g of distilled water. The mixture was degassed by bubbling nitrogen in the bulk and the temperature in the solution was increased up to 60°C over 50 minutes. Once the temperature in the kettle reactor was stabilized at 60°C, 27.9 g (10.3 mmol) of a 10 wt% V50 aqueous solution and 9.1 g (15.4 mmol) of a 50 wt% AHPS aqueous solution were introduced under a nitrogen blanket. Then, in parallel, 172.4 g (292.8 mmol) of a 50 wt% AHPS aqueous solution and 102.9 g (616.7 mmol) of a 78 wt% HEMA aqueous solution were continuously fed over 8 hours (AHPS flow rate = 0.359 $g\cdot min^{-1}$; HEMA flow rate = 0.214 $g.min^{-1}$). After completion of the feeding, the reaction medium was stirred for an additional 2 hours at 60°C followed by one more hour at 90°C.

At the end of the polymerization, a sample was taken for $^1H$ and $^{31}P$ NMR analysis to determine the AHPS, the HEMA and the VPA monomer conversions.

Results:

VPA monomer conversion ($^{31}P$ NMR) = 88.0%
AHPS monomer conversion ($^1H$ NMR) > 99.9%
HEMA conversion ($^1H$ NMR) > 99.9%

**Example 5. Synthesis of a statistical copolymer poly(vinyl phosphonic acid-stat-3-((3-acrylamidopropyl)dimethylammonio)-2-hydroxypropane-1-sulfonate-stat-metoxy poly(ethylene glycol) methacrylate) (poly(VPA-stat-AHPS-stat-mPEGMA$_{750}$)) in the present invention by conventional radical polymerization (initiator: 2,2'-Azobis(2-methylpropionamidine) dihydrochloride) V50 - VPA = 10 mol% - AHPS = 30 mol% - mPEGMA$_{750}$ = 60 mol%)**

In a 500 mL kettle reactor equipped with a water condenser and a mechanical agitation, were introduced, at room temperature (22°C), 5 g (39.5 mmol) of a 85.4 wt% vinyl phosphonic acid solution, 20.7 g (11.8 mmol) of a 43 wt% mPEGMA$_{750}$ solution and 105.9 g of distilled water. The mixture was degassed by bubbling nitrogen in the bulk and the temperature in the solution was increasing up to 60°C over 50 minutes. Once the temperature in the kettle reactor was stabilized at 60°C, 10.72 g (3.9 mmol) of a 10 wt% V50 aqueous solution and 3.5 g (5.9 mmol) of a 50 wt% AHPS solution were introduced under a nitrogen blanket. Then, in parallel, 66.3 g (112.6 mmol) of a 50 wt% AHPS aqueous solution and 392.9 g (225.3 mmol) a 43 wt% mPEGMA$_{750}$ aqueous solution were continuously fed over 8 hours (AHPS flow rate = 0.138 $g\cdot min^{-1}$; mPEGMA$_{750}$ flow rate = 0.819 $g.min^{-1}$). After completion of the feeding, the reaction medium was stirred for an additional 2 hours at 60°C followed by one more hour at 90°C.

At the end of the polymerization, a sample was taken for $^1H$ and $^{31}P$ NMR analysis to determine the AHPS, the mPEGMA$_{750}$ and the VPA monomer conversions.

Results:

VPA monomer conversion ($^{31}P$ NMR) = 87.3%
AHPS monomer conversion ($^{1}H$ NMR) > 99.9%
$mPEGMA_{750}$ conversion ($^{1}H$ NMR) > 99.9%

**Example 6. Reduction of biofilm adhesion test - Pseudomonas aeruginosa ATCC 9027**

The ability of statistical copolymer poly(vinyl phosphonic acid-stat-SPE) (poly(VPA-stat-SPE) made according to Example 1 to reduce biofilm adhesion by *Pseudomonas aeruginosa ATCC 9027* was evaluated.

The biofilm adhesion reduction test according to the present example was conducted in CDC Biofilm Reactors® (available from Biosurface Technologies Corporation, Bozeman, Montana). Aluminum coupons (polished or unpolished) were treated by dip-coating the said coupons in a solution of poly(VPA-stat-SPE) and drying the dipped coupons on a hot plate. 2 CDC reactors were used - one control with untreated coupons and one with treated coupons. The CDC reactors were then inoculated with the bacteria and bacterial growth media. Each reactor was run in batch phase (no incoming or outgoing growth media) for 24 hours. Unless otherwise stated, the reactors were run while stirring for a turbulent shear mode. Afterwards, the coupons were removed and evaluated by CFU (colony-forming unit) counts and microscopy. The results are summarized in Table 1 below.

Table 1.

| Sample | Avg Log CFU | STDEV |
|---|---|---|
| Control Aluminum (Not Polished) | 5.93 | 0.25 |
| Dip Coat (Not Polished) | 5.21 | 0.32 |
| Control Aluminum (Polished) | 5.46 | 0.34 |
| Dip Coat (Polished) | 5.41 | 0.31 |

As shown in Table 1, a 0.7 log biofilm reduction (-80% reduction) was observed between the control coupon (aluminum; not polished) and the treated coupon (dip-coated; not polished).

**Example 7. Reduction of biofilm adhesion test - cooling tower water bacteria**

The ability of statistical copolymer poly(vinyl phosphonic acid-stat-SPE) (poly(VPA-stat-SPE) made according to Example 1 to reduce biofilm adhesion by bacteria found in cooling tower water was evaluated.

The biofilm adhesion reduction test according to the present example was conducted according to the procedure described in Example 6, except that aluminum coupons that were treated by spin-coating were also evaluated and that water sampled from a cooling tower containing the test bacteria was used. The results are summarized in Table 2 below.

Table 2.

| Sample | Avg Log CFU | STDEV |
|---|---|---|
| Control Aluminum | 5.07 | 0.08 |
| Coated Aluminum- spin | 3.17 | 0.14 |
| Coated Aluminum- dip | 3.96 | 0.57 |

As shown in Table 2, a 2-log biofilm reduction (-99% reduction) was observed when cooling tower water bacteria was used.

**Example 8. Reduction of biofilm adhesion test for poly(VPA-stat-AHPS) - Pseudomonas aeruginosa ATCC 9027**

The ability of statistical copolymer poly(vinyl phosphonic acid-stat-AHPS) (poly(VPA-stat-AHPS) made according to Example 2 to reduce biofilm adhesion by *Pseudomonas aeruginosa ATCC 9027* was evaluated.

The biofilm adhesion reduction test according to the present example was conducted in CDC Biofilm Reactors® (available from Biosurface Technologies Corporation, Bozeman, Montana). Aluminum coupons, first treated with 70% nitric acid, were coated by dip-coating the said coupons in a solution of poly(VPA-stat-AHPS) and drying the dipped coupons on a hot plate. 2 CDC reactors were used - one control with untreated coupons and one with treated coupons. The CDC reactors were then inoculated with the bacteria and bacterial growth media. Each reactor was run in batch

phase (no incoming or outgoing growth media) for 24 hours. Unless otherwise stated, the reactors were run while stirring for a turbulent shear mode. Afterwards, the coupons were removed, biofilms were stained with SYTO™ 9 green fluorescent nucleic acid stain (available from ThermoFisher), and imaged by confocal microscopy. The confocal images were evaluated by ImageJ (Schneider, C. A.; Rasband, W. S. & Eliceiri, K. W. (2012), "NIH Image to ImageJ: 25 years of image analysis", Nature methods 9(7): 671-675, PMID 22930834) using the analyze particles function. Each particle was counted as one cell. Particle number is converted into log bacterial cells per coupon using knowledge of the coupon geometry. The results are summarized in Table 3 below.

Table 3.

| Sample | Avg Log cells/coupon | STDEV |
|---|---|---|
| Control Aluminum | 5.19 | +0.12/-0.16 |
| Dip Coated Aluminum | 4.22 | +0.23/-0.54 |

As shown in Table 3, a 0.97 log biofilm reduction (-90% reduction) was observed between the control coupon and the treated coupon.

**Example 9. Reduction of biofilm adhesion test for poly(VPA-stat-AHPS-stat-HEA) - Pseudomonas aeruginosa ATCC 9027**

The ability of statistical copolymer poly(vinyl phosphonic acid-stat-AHPS-stat-HEA) (poly(VPA-stat-AHPS-stat-HEA) made according to Example 3 to reduce biofilm adhesion by *Pseudomonas aeruginosa ATCC 9027* was evaluated.

The biofilm adhesion reduction test according to the present example was conducted in CDC Biofilm Reactors® (available from Biosurface Technologies Corporation, Bozeman, Montana). Aluminum coupons, first treated with 70% nitric acid, were coated by dip-coating the said coupons in a solution of poly(VPA-stat-AHPS-stat-HEA) and drying the dipped coupons on a hot plate. 2 CDC reactors were used - one control with untreated coupons and one with treated coupons. The coupons were treated and analyzed as previously described in example 8. The results are summarized in Table 4 below.

Table 4.

| Sample | Avg Log cells/coupon | STDEV |
|---|---|---|
| Control Aluminum | 5.33 | +0.21/-0.42 |
| Dip Coated Aluminum | 4.15 | +0.18/-0.31 |

As shown in Table 4, a 1.18 log biofilm reduction (-93% reduction) was observed between the control coupon and the treated coupon.

**Example 10. Reduction of biofilm adhesion test for poly(VPA-stat-AHPS-stat-HEMA) - Pseudomonas aeruginosa ATCC 9027**

The ability of statistical copolymer poly(vinyl phosphonic acid-stat-AHPS-stat-HEMA) (poly(VPA-stat-AHPS-stat-HEMA) made according to Example 4 to reduce biofilm adhesion by *Pseudomonas aeruginosa ATCC 9027* was evaluated.

The biofilm adhesion reduction test according to the present example was conducted in CDC Biofilm Reactors® (available from Biosurface Technologies Corporation, Bozeman, Montana). Aluminum coupons, first treated with 70% nitric acid, were coated by dip-coating the said coupons in a solution of poly(VPA-stat-AHPS-stat-HEMA) and drying the dipped coupons on a hot plate. 2 CDC reactors were used - one control with untreated coupons and one with treated coupons. The coupons were treated and analyzed as previously described in examples 8. The results are summarized in Table 5 below.

Table 5.

| Sample | Avg Log cells/coupon | STDEV |
|---|---|---|
| Control Aluminum | 5.33 | +0.21/-0.42 |
| Dip Coated Aluminum | 4.76 | +0.17/-0.27 |

As shown in Table 5, a 0.57 log biofilm reduction (-75% reduction) was observed between the control coupon and the treated coupon.

**Example 11. Reduction of biofilm adhesion test for poly(VPA-stat-SPE) on polyethylene terephthalate - environmental strains**

The ability of statistical copolymer poly(vinyl phosphonic acid-stat-SPE) (poly(VPA-stat-SPE) made according to Example 1 to reduce biofilm adhesion by environmental strains was evaluated.
The biofilm adhesion reduction test according to the present example was conducted in CDC Biofilm Reactors® (available from Biosurface Technologies Corporation, Bozeman, Montana). Polyethylene terephthalate (PET) coupons were coated by dip-coating the said coupons in a solution of poly(VPA-stat-SPE). 2 CDC reactors were used - one control with untreated coupons and one with treated coupons. The CDC reactors were then inoculated with the bacteria and bacterial growth media. Each reactor was run in batch phase (no incoming or outgoing growth media) for 24 hours. Unless otherwise stated, the reactors were run while stirring for a turbulent shear mode. Afterwards, the coupons were removed, biofilms were stained with SYTO™ 9 green fluorescent nucleic acid stain (available from ThermoFisher), and imaged by confocal microscopy. The confocal images were evaluated by MATLAB (MATLAB and Statistics Toolbox Release 2015b, The MathWorks, Inc., Natick, Massachusetts, United States). Biomass was determined by thresholding and summing bright pixels over the stack of confocal images. The results are summarized in Table 6 below.

Table 6.

| Sample | Bright pixels | % reduction |
|---|---|---|
| Control PET | 7240 | - |
| Dip Coated PET | 98 | 99% |

As shown in Table 6, 99% reduction in bright pixels (biomass) was observed between the control coupon and the treated coupon.

**Comparative Example 12. Reduction of biofilm adhesion test with homopolymer**

The ability of biofilm reduction of the copolymer was further demonstrated by comparing it with the corresponding zwitterionic homopolymer, which did not show any significant biofilm reduction ability. The testing was conducted according to the procedure described in Example 6. The results are summarized in Table 7 below.

**Table 7**

| Sample | Avg Log CFU | STDEV |
|---|---|---|
| Control Aluminum | 5.75 | 0.12 |
| Coated Aluminum, spin | 5.92 | 0.19 |
| Coated Aluminum, dip | 5.88 | 0.15 |

**Example 13. Coating of silicate coupons with poly(VPA-*stat*-SPE)**

Silicate glass coupons coated with poly(VPA-stat-SPE) made according to Example 1 were prepared by spin-coating. The spin coating apparatus used was a Spin Coater - Laurell WS-650. On a cleaned substrate, 300 uL of poly(VPA-stat-SPE) solution was pipetted onto the substrate and spread to cover the entire surface. The substrate was allowed to sit for 5 minutes without spinning and then spun for 3 minutes at 1000 rpm/s. The coated substrate was then dried on a hot plate. The substrate used was an alkaline earth, boro-aluminosilicate glass, available as Eagle glass cover slides. The poly(VPA-stat-SPE) solution used contained 2.5% poly(VPA-stat-SPE) in milli-Q water and 0.1M NaCl.
The resulting approximate thickness of the coating was measured using profilometry (VEECO DEKTAK 151). The film thickness was determined to be 100 nm.

**Example 14. Adhesion test on the poly(VPA-stat-SPE)-coated silicate glass coupons**

Silicate glass coupons were coated according to Example 13. The coupons were then each separately immersed in 40mL milli Q water, left to sit vertically for the duration of the experiment, removed from the solution, and dried for 10

minutes on a hot plate at 60°C.

Profilometry was used to measure the resulting film thickness. It was observed that film thicknesses of 5-10nm remained on the surface after an immersion in milli-Q water for a few hours to 1 day.

**Comparative Example 15. Adhesion test on homopolySPE-coated silicate glass coupons**

The adsorption/desorption behavior of a homopolySPE (Mw=170,000 g/mol) on borosilicate glass was determined. QCM-D (Q-Sense, Biolin Scientific) adsorption/ desorption measurements were conducted whereby a solution of homopolySPE (0.45 wt%) was made to flow over the sensors until an equilibrium film thickness was measured. Subsequently, a rinse step with milli-Q water was started, where milli-Q water is made to flow over the coated sensors.

The equilibrium initial film thickness measured was 18 nm, which decreased to 13 nm once the rinsing step was carried out for 30 min.

**Example 16. Reduction of biofilm adhesion test - *Pseudomonas aeruginosa* ATCC 9027**

The ability of statistical copolymer (poly(VPA-stat-SPE) made according to Example 1 to reduce biofilm adhesion by *Pseudomonas aeruginosa ATCC 9027* is evaluated using coupons made according to Example 13.

The biofilm adhesion reduction test according to the present example is conducted in CDC Biofilm Reactors® (available from Biosurface Technologies Corporation, Bozeman, Montana). 2 CDC reactors are used - one control with untreated, unpolished coupons and one with treated, unpolished coupons. The CDC reactors are then inoculated with the bacteria and bacterial growth media. Each reactor is run in batch phase (no incoming or outgoing growth media) for 24 hours. Unless otherwise stated, the reactors are run while stirring for a turbulent shear mode. Afterwards, the coupons are removed and evaluated by CFU (colony-forming unit) counts and microscopy.

A significant reduction (several tens of % reduction) is observed between the control coupon (glass; not polished) and the treated coupon (coated glass; not polished).

**Examples 17 to 18. Surface potential measurements on concrete and glass substrates**

Surface potential was measured using Electrokinetic Analyzer for Solid Surface Analysis: SurPASS™ 3 (Anton-Paar). As a substrate for the measurements, concrete coated polycarbonate (polycarbonate cup filled with concrete) CDC coupons (Biosurface Technologies Corporation, Bozeman MT) or borosilicate glass CDC coupons (Biosurface Technologies Corporation, Bozeman MT) were used. The measurements were done in 20 mM NaCl solution with pH adjusted to pH 7.9 using 0.05 M NaOH/HCl in case of concrete and to pH 7.2-pH 7.5 for borosilicate surface.

**Example 17. Surface potential measurements on concrete coupons**

The surface charge was first measured for pristine concrete coupons. After the measurements, coupons were removed from the instrument and immersed into solution of poly(VPA-stat-SPE) made according to Example 1 (75 ppm in 20 mM NaCl) for 30 min. The modified coupons were removed from the copolymer solution, the plastic cup of the coupon was wiped with Kimwipes® and the concrete was air-dried prior assembly into the instrument. The air-dried coupons were assembled in the holder and surface zeta potential measured at pH 7.9 with 20 mM NaCl. The surface was washed twice with 20 mM NaCl solution prior to taking value of surface potential to get equilibrated pH inside the measurement cell. The value of zeta potential was measured in triplicates.

Pristine concrete has negatively charged surface with the surface potential of -8.5 mV. Surface modification with the polymer resulted in a decrease in the surface charge to -1 mV indicating adsorption of the polymer on surface and increase in surface hydrophilicity as compared to pristine coupons.

**Example 18. Surface potential measurements on Borosilicate Glass coupons**

Borosilicate glass CDC coupons (Biosurface Technologies Corporation, Bozeman MT) were cleaned with UV-vis for 1h and stored under sterile ultrapure water before the measurements. The surface charge was first measured for pristine borosilicate glass coupons at pH 7.2. After the measurements, coupons were removed from the instrument and immersed into solution of poly(VPA-stat-SPE) made according to Example 1 (75 ppm in 20 mM NaCl) for 30 min. The modified coupons were removed from the copolymer solution, the excess of liquid was wiped with Kimwipes® and the modified coupons were air-dried prior assembly into the instrument. The air-dried coupons were assembled in the holder and surface zeta potential measured at pH 7.5 with 20 mM NaCl. The surface was washed twice with 20 mM NaCl solution prior to taking value of surface potential to get equilibrated pH inside the measurement cell. The value of zeta potential was measured in triplicates.

Pristine borosilicate glass has negatively charged surface with the surface potential of -9.5 mV. Surface modification with the polymer resulted in a decrease in the surface charge to -5 mV indicating adsorption of the polymer on surface and increase in surface hydrophilicity as compared to pristine borosilicate glass coupons.

## Claims

1. A copolymer having repeating units derived from one or more zwitterionic monomers and repeating units derived from vinyl phosphonic acid, said copolymer being obtained by radical polymerization or copolymerization using a radical initiator.

2. The copolymer according to claim 1, wherein the repeating units derived from one or more zwitterionic monomers are derived from one or more betaine monomers.

3. The copolymer according to claim 2, wherein the betaine monomers are selected from the group consisting of

a) alkyl sulfonates or phosphonates of dialkylammonium alkyl acrylates or methacrylates, acrylamido or methacrylamido, typically

- sulfopropyldimethylammonioethyl (meth)acrylate,
- sulfoethyldimethylammonioethyl (meth)acrylate,
- sulfobutyldimethylammonioethyl (meth)acrylate,
- sulfohydroxypropyldimethylammonioethyl (meth)acrylate,
- sulfopropyldimethylammoniopropylacrylamide,
- sulfopropyldimethylammoniopropylmethacrylamide,
- sulfohydroxypropyldimethylammoniopropyl(meth)acrylamide,
- sulfopropyldiethylammonio ethoxyethyl methacrylate.

b) heterocyclic betaine monomers, typically

- sulfobetaines derived from piperazine,
- sulfobetaines derived from 2-vinylpyridine and 4-vinylpyridine, more typically 2- vinyl-1-(3-sulfopropyl)pyridinium betaine or 4-vinyl-1-(3-sulfopropyl)pyridinium betaine,
- 1vinyl-3-(3-sulfopropyl)imidazolium betaine;

c) alkyl or hydroxyalkyl sulfonates or phosphonates of dialkylammonium alkyl allylics, typically sulfopropylmethyldiallylammonium betaine;
d) alkyl or hydroxyalkyl sulfonates or phosphonates of dialkylammonium alkyl styrenes;
e) betaines resulting from ethylenically unsaturated anhydrides and dienes;
f) phosphobetaines of formulae

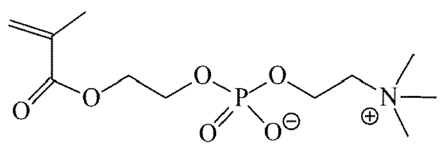

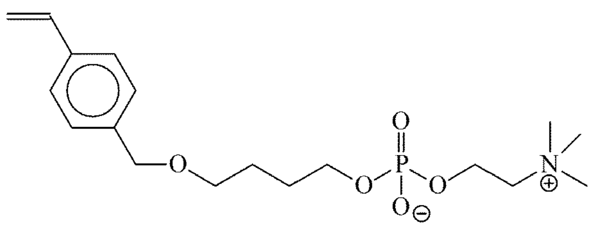

; and
g) betaines resulting from cyclic acetals, typically ((dicyanoethanolate)ethoxy)dimethylammoniopropylmethacrylamide.

4. The copolymer according to claim 2, wherein the betaine monomers are selected from the group consisting of sulfohydroxypropyldimethylammonioethyl (meth)acrylamide and sulfopropyldimethylammonioethyl (meth)acrylate.

5. The copolymer according to any one of claims 1 to 4, which comprises up to 90 mol%, typically less than 70 mol%, more typically less than 50 mol% and even more typically less than 30 mol% of repeating units derived from vinyl phosphonic acid, based on the molar composition of the copolymer.

6. The copolymer according to any one of claims 1 to 5, which comprises greater than 30 mol%, typically greater than 50 mol%, more typically greater than 70 mol%, even more typically greater than 90 mol%, of repeating units derived from the one or more zwitterionic monomers, based on the molar composition of the copolymer.

7. The copolymer according to any one of claims 1 to 4, further comprising repeating units derived from monomers selected from the list consisting of 2-hydroxyethyl methacrylate (HEMA), hydroxypropyl methacrylate, 2-hydroxyethyl acrylate (HEA), hydroxypropyl acrylate, 4-hydroxybutyl acrylate, poly(ethylene glycol) methacrylate (PEGMA), poly(ethylene glycol) methyl ether methacrylate (mPEGMA), poly(ethylene glycol) ethyl ether methacrylate, poly(ethylene glycol) methyl ether acrylate and poly(ethylene glycol) ethyl ether acrylate.

8. The copolymer according to claim 7, which comprises about 1 mol% to about 20 mol% of repeating units derived from vinyl phosphonic acid, based on the molar composition of the copolymer.

9. Use of a composition for reducing or preventing colloids adhesion and/or fouling on a substrate, the composition comprising a copolymer according to any one of claims 1 to 8.

10. Use according to claim 9, wherein the composition is free of vinylpyrrolidone homopolymer or copolymer.

11. Use according to claim 9 or 10, wherein the composition is free of biocide.

12. Use according to any one of claims 9 to 11, wherein the substrate is in contact with an aqueous medium.

13. Use according to any one of claims 9 to 12, wherein the substrate is a metal or metal-containing substrate, a silicate, a concrete or a plastic substrate, typically wherein the metal is selected from the group consisting of iron, cast iron, copper, brass, aluminum, titanium, carbon steel, stainless steel, and alloys thereof.

14. Article comprising a metal or metal-containing surface, a silicate surface, a concrete surface or a plastic surface wherein the metal or metal-containing surface, the silicate surface, the concrete surface or the plastic surface is at least partially coated with a composition comprising a copolymer having repeating units derived from one or more zwitterionic monomers and repeating units derived from vinyl phosphonic acid according to claim 1 in an amount effective to reduce or prevent colloids adhesion and/or fouling to the metal or metal-containing surface, the silicate surface, the concrete surface or the plastic surface.

15. Article according to claim 14, wherein the article is a pipeline, a methane terminal; a medical device, typically medical tubing, orthopedic article, implantable device, drape, biosensor, dental implant, mechanical heart valve, extra-corporeal blood vessel, stent, or surgical tool; part of a heating and/or cooling system, typically heat exchanger, steam condenser, wet tower, or cooling tower; household equipment, a food contact surface, industrial equipment, degreasing tank bath or architectural feature.

16. Article according to claim 14, wherein the article is a ceramic electronic component, typically an insulator, wiring board, capacitor, or spacer oxide; ceramic (esp. porcelain) filter; heating apparatus, typically a hot plate or immersion heater; ceramic pipes; medical or dental implants; ceramic (esp. porcelain) tools or molds.

17. Article according to claim 14, wherein the article is silicate glass, glass panel e.g. architectural glass panel or solar panels; silicate paint, or fibers, typically insulation fibers.

18. Article according to claim 14, wherein the article is a medical device, typically medical tubing, sterilization trays, orthopedic article, dental instrument or surgical tool; part of a heating and/or cooling system wet tower, or cooling tower; industrial equipment, or architectural feature; waterproofing membrane, swimming pool membrane or liner.

## Patentansprüche

1. Copolymer mit Wiederholungseinheiten, die sich von einem oder mehreren zwitterionischen Monomeren ableiten, und Wiederholungseinheiten, die sich von Vinylphosphonsäure ableiten, wobei das Copolymer durch radikalische Polymerisation oder Copolymerisation unter Verwendung eines Radikalinitiators erhalten wird.

2. Copolymer nach Anspruch 1, wobei sich die Wiederholungseinheiten, die sich von einem oder mehreren zwitterionischen Monomeren ableiten, von einem oder mehreren Betain-Monomeren ableiten.

3. Copolymer nach Anspruch 2, wobei die Betain-Monomere ausgewählt sind aus der Gruppe bestehend aus

a) Alkylsulfonaten oder -phosphonaten von Dialkylammoniumalkylacrylaten oder -Methacrylaten, Acrylamido oder Methacrylamido, typischerweise

- Sulfopropyldimethylammonioethyl(meth)acrylat,
- Sulfoethyldimethylammonioethyl(meth)acrylat,
- Sulfobutyldimethylammonioethyl(meth)acrylat,
- Sulfohydroxypropyldimethylammonioethyl(meth)-acrylat,
- Sulfopropyldimethylammoniopropylacrylamid,
- Sulfopropyldimethylammoniopropylmethacrylamid,
- Sulfohydroxypropyldimethylammoniopropyl(meth)-acrylamid,
- Sulfopropyldiethylammonioethoxyethylmethacrylat;

b) heterocyclischen Betain-Monomeren, typischerweise

- Sulfobetainen, die sich von Piperazin ableiten,
- Sulfobetainen, die sich von 2-Vinylpyridin und 4-Vinylpyridin ableiten, noch typischer 2-Vinyl-1-(3-sulfopropyl)pyridiniumbetain oder 4-Vinyl-1-(3-sulfopropyl)pyridiniumbetain,
- 1-Vinyl-1-(3-sulfopropyl)imidazoliumbetain;

c) Alkyl- oder Hydroxyalkylsulfonaten oder - phosphonaten von Dialkylammoniumalkylallylverbindungen, typischerweise Sulfopropylmethyldiallylammoniumbetain;
d) Alkyl- oder Hydroxyalkylsulfonaten oder - phosphonaten von Dialkylammoniumalkylstyrolen;
e) Betainen, die aus ethylenisch ungesättigten Anhydriden und Dienen resultieren;
f) Phosphobetainen der Formeln

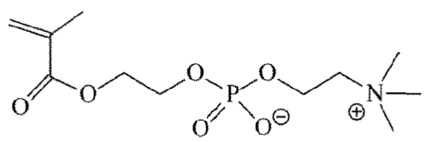

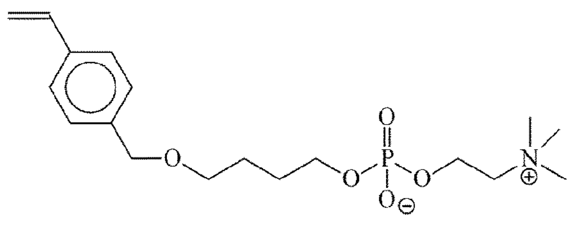

und
g) Betainen, die aus cyclischen Acetalen resultieren, typischerweise ((Dicyanoethanolat)-ethoxy)dimethylammoniopropylmethacrylamid.

4. Copolymer nach Anspruch 2, wobei die Betain-Monomere aus der Gruppe bestehend aus Sulfohydroxypropyldimethylammonioethyl(meth)acrylamid und Sulfopropyldimethylammonioethyl(meth)acrylat ausgewählt sind.

5. Copolymer nach einem der Ansprüche 1 bis 4, das bis zu 90 Mol-%, typischerweise weniger als 70 Mol-%, noch

typischer weniger als 50 Mol-% und sogar noch typischer weniger als 30 Mol-% Wiederholungseinheiten, die sich von Vinylphosphonsäure ableiten, bezogen auf die molare Zusammensetzung des Copolymers, umfasst.

**6.** Copolymer nach einem der Ansprüche 1 bis 5, das mehr als 30 Mol-%, typischerweise mehr als 50 Mol-%, noch typischer mehr als 70 Mol-% und sogar noch typischer mehr als 90 Mol-% Wiederholungseinheiten, die sich von dem einem oder den mehreren zwitterionischen Monomeren ableiten, bezogen auf die molare Zusammensetzung des Copolymers, umfasst.

**7.** Copolymer nach einem der Ansprüche 1 bis 4, ferner umfassend Wiederholungseinheiten, die sich von Monomeren aus der Liste bestehend aus 2-Hydroxyethylmethacrylat (HEMA), Hydroxypropylmethacrylat, 2-Hydroxyethylacrylat (HEA), Hydroxypropylacrylat, 4-Hydroxybutylacrylat, Poly(ethylenglykol)methacrylat (PEGMA), Poly-(ethylenglykol)methylethermethacrylat (mPEGMA), Poly(ethylenglykol)ethylethermethacrylat, Poly-(ethylenglykol)methyletheracrylat und Poly(ethylenglykol)ethyletheracrylat ableiten.

**8.** Copolymer nach Anspruch 7, das etwa 1 Mol-% bis etwa 20 Mol-% Wiederholungseinheiten, die sich von Vinylphosphonsäure ableiten, bezogen auf die molare Zusammensetzung des Copolymers, umfasst.

**9.** Verwendung einer Zusammensetzung zur Verringerung oder Verhinderung von Kolloidanhaftung und/oder Fouling auf einem Substrat, wobei die Zusammensetzung ein Copolymer nach einem der Ansprüche 1 bis 8 umfasst.

**10.** Verwendung nach Anspruch 9, wobei die Zusammensetzung frei von Vinylpyrrolidon-Homopolymer oder -Copolymer ist.

**11.** Verwendung nach Anspruch 9 oder 10, wobei die Zusammensetzung frei von Biozid ist.

**12.** Verwendung nach einem der Ansprüche 9 bis 11, wobei das Substrat mit einem wässrigen Medium in Kontakt steht.

**13.** Verwendung nach einem der Ansprüche 9 bis 12, wobei es sich bei dem Substrat um ein Metallsubstrat oder metallhaltiges Substrat, ein Silicat, ein Beton- oder ein Kunststoffsubstrat handelt, typischerweise wobei das Metall aus der Gruppe bestehend aus Eisen, Gusseisen, Kupfer, Messing, Aluminium, Titan, unlegiertem Stahl, nichtrostendem Stahl und Legierungen davon ausgewählt ist.

**14.** Artikel, umfassend eine Metalloberfläche oder metallhaltige Oberfläche, eine Silicatoberfläche, eine Betonoberfläche oder eine Kunststoffoberfläche, wobei die Metalloberfläche oder metallhaltige Oberfläche, die Silicatoberfläche, die Betonoberfläche oder die Kunststoffoberfläche zumindest teilweise mit einer Zusammensetzung, die ein Copolymer mit Wiederholungseinheiten, die sich von einem oder mehreren zwitterionischen Monomeren ableiten, und Wiederholungseinheiten, die sich von Vinylphosphonsäure ableiten, nach Anspruch 1 umfasst, in einer zur Verringerung oder Verhinderung von Kolloidanhaftung und/oder Fouling auf der Metalloberfläche oder metallhaltigen Oberfläche, der Silicatoberfläche, der Betonoberfläche oder der Kunststoffoberfläche wirksamen Menge, beschichtet ist.

**15.** Artikel nach Anspruch 14, wobei es sich bei dem Artikel um eine Pipeline, ein Methanterminal; eine medizinische Vorrichtung, typischerweise einen medizinischen Schlauch, einen orthopädischen Artikel, eine implantierbare Vorrichtung, ein Abdecktuch, einen Biosensor, ein Zahnimplantat, eine mechanische Herzklappe, ein extrakorporeales Blutgefäß, einen Stent oder ein chirurgisches Werkzeug; einen Teil eines Heiz- oder Kühlsystems, typischerweise Wärmetauscher, Dampfkondensator, Nassturm oder Kühlturm; ein Haushaltsgerät, eine Lebensmittelkontaktoberfläche, ein technisches Gerät, ein Entfettungstankbad oder ein architektonisches Merkmal handelt.

**16.** Artikel nach Anspruch 14, wobei es sich bei dem Artikel um ein keramisches elektronisches Bauteil, typischerweise einen Isolator, eine Verdrahtungsplatte, einen Kondensator oder ein Spaceroxid; einen Keramikfilter (insbesondere einen Porzellanfilter); eine Heizvorrichtung, typischerweise eine Heizplatte oder einen Tauchsieder; Keramikrohre; medizinische Implantate oder Zahnimplantate; Werkzeuge oder Gußformen aus Keramik (insbesondere Porzellan) handelt.

**17.** Artikel nach Anspruch 14, wobei es sich bei dem Artikel um Silicatglas, eine Glasplatte, z. B. eine Architekturglasplatte oder Solarplatten; Silicatfarbe oder Fasern, typischerweise Isolationsfasern, handelt.

**18.** Artikel nach Anspruch 14, wobei es sich bei dem Artikel um eine medizinische Vorrichtung, typischerweise einen medizinischen Schlauch, Sterilisationsschalen, einen orthopädischen Artikel, ein zahnmedizinisches Instrument

oder ein chirurgisches Werkzeug; einen Teil eines Heiz- oder Kühlsystems, eines Nassturms oder eines Kühlturms; ein technisches Gerät oder ein architektonisches Merkmal; eine Abdichtungsmembran oder eine Schwimmbadmembran oder -auskleidung handelt.

## Revendications

1. Copolymère ayant des motifs répétitifs issus d'un ou plusieurs monomères zwitterioniques et de motifs répétitifs issus d'acide vinylphosphonique, ledit copolymère étant obtenu par polymérisation ou copolymérisation radicalaire en utilisant un initiateur de radicaux.

2. Copolymère selon la revendication 1, les motifs répétitifs issus d'un ou plusieurs monomères zwitterioniques étant issus d'un ou plusieurs monomères de bétaïne.

3. Copolymère selon la revendication 2, les monomères de bétaïne étant choisis dans le groupe constitué par

    a) des sulfonates ou phosphonates d'alkyle d'acrylates ou méthacrylates de dialkylammoniumalkyle, acrylamido ou méthacrylamido, typiquement

    - (méth)acrylate de sulfopropyldiméthylammonioéthyle,
    - (méth)acrylate de sulfoéthyldiméthylammonioéthyle,
    - (méth)acrylate de sulfobutyldiméthylammonioéthyle,
    - (méth)acrylate de sulfohydroxypropyldiméthylammonioéthyle,
    - sulfopropyldiméthylammoniopropylacrylamide,
    - sulfopropyldiméthylammoniopropylméthacrylamide,
    - sulfohydroxypropyldiméthylammoniopropyl(méth)acr ylamide,
    - méthacrylate de sulfopropyldiéthylammonio éthoxyéthyle.

    b) des monomères de bétaïne hétérocyclique, typiquement

    - des sulfobétaïnes issues de pipérazines,
    - des sulfobétaïnes issues de 2-vinylpyridine et 4-vinylpyridine, plus typiquement 2-vinyl-1-(3-sulfopropyl)pyridinium bétaïne ou 4-vinyl-1-(3-sulfopropyl)pyridinium bétaïne,
    - 1-vinyl-3-(3-sulfopropyl)imidazolium bétaïne ;

    c) des sulfonates ou phosphonates d'alkyle ou d'hydroxyalkyle de composés alkylallyliques de dialkylammonium, typiquement sulfopropylméthyldiallylammonium bétaïne ;
    d) des sulfonates ou phosphonates d'alkyle ou d'hydroxyalkyle d'alkylstyrènes de dialkylammonium ;
    e) des bétaïnes résultant d'anhydrides éthyléniquement insaturés et de diènes ;
    f) des phosphobétaïnes des formules

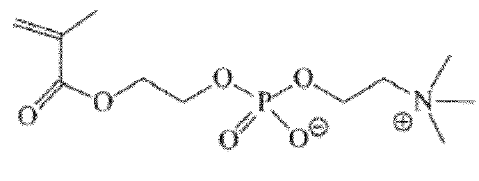

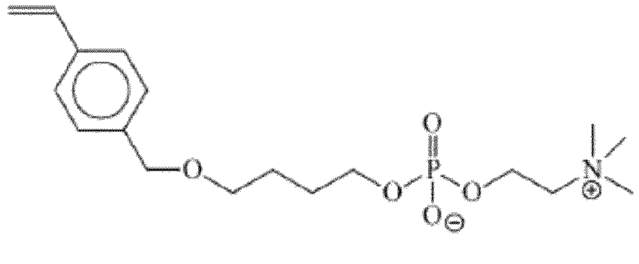

;

et

g) des bétaïnes résultant d'acétals cycliques, typiquement ((dicyanoéthanolate)éthoxy)diméthylammoniopropyl méthacrylamide.

4. Copolymère selon la revendication 2, les monomères de bétaïne étant choisis dans le groupe constitué par sulfohydroxypropyldiméthylammonioéthyl(méth)acrylamide et (méth)acrylate de sulfopropyldiméthylammonioéthyle.

5. Copolymère selon l'une quelconque des revendications 1 à 4, qui comprend jusqu'à 90 % en moles, typiquement moins de 70 % en moles, plus typiquement moins de 50 % en moles et encore plus typiquement moins de 30 % en moles de motifs répétitifs issus d'acide vinylphosphonique, sur la base de la composition molaire du copolymère.

6. Copolymère selon l'une quelconque des revendications 1 à 5, qui comprend plus de 30 % en moles, typiquement plus de 50 % en mol, plus typiquement plus de 70 % en moles, encore plus typiquement plus de 90 % en moles, de motifs répétitifs issus du ou des monomères zwitterioniques, sur la base de la composition molaire du copolymère.

7. Copolymère selon l'une quelconque des revendications 1 à 4, comprenant en outre des motifs répétitifs issus de monomères choisis dans la liste constituée par le méthacrylate de 2-hydroxyéthyle (HEMA), le méthacrylate d'hydroxypropyle, l'acrylate de 2-hydroxyéthyle (HEA), l'acrylate d'hydroxypropyle, l'acrylate de 4-hydroxybutyle, un méthacrylate de poly(éthylène glycol) (PEGMA), un méthacrylate d'éther méthylique de poly(éthylène glycol) (mPEGMA), un méthacrylate d'éther éthylique de poly(éthylène glycol), un acrylate d'éther méthylique de poly(éthylène glycol) et un acrylate d'éther éthylique de poly(éthylène glycol).

8. Copolymère selon la revendication 7, qui comprend environ 1 % en moles à environ 20 % en moles de motifs répétitifs issus d'acide vinylphosphonique, sur la base de la composition molaire du copolymère.

9. Utilisation d'une composition pour la réduction ou la prévention de l'adhérence de colloïdes et/ou de l'encrassement sur un substrat, la composition comprenant un copolymère selon l'une quelconque des revendications 1 à 8.

10. Utilisation selon la revendication 9, la composition étant exempte d'homopolymère ou de copolymère de vinylpyrrolidone.

11. Utilisation selon la revendication 9 ou 10, la composition étant exempte de biocide.

12. Utilisation selon l'une quelconque des revendications 9 à 11, le substrat étant en contact avec un milieu aqueux.

13. Utilisation selon l'une quelconque des revendications 9 à 12, le substrat étant un substrat métallique ou contenant un métal, un substrat de silicate, un substrat de béton ou un substrat de matière plastique, typiquement le métal étant choisi dans le groupe constitué par le fer, la fonte, le cuivre, le laiton, l'aluminium, le titane, l'acier au carbone, l'acier inoxydable et des alliages correspondants.

14. Article comprenant une surface métallique ou contenant un métal, une surface de silicate, une surface de béton ou une surface de matière plastique, la surface métallique ou contenant un métal, la surface de silicate, la surface de béton ou la surface de matière plastique étant au moins partiellement revêtue par une composition comprenant un copolymère ayant des motifs répétitifs issus d'un ou plusieurs monomères zwitterioniques et des motifs répétitifs issus d'acide vinylphosphonique selon la revendication 1 en une quantité efficace pour réduire ou empêcher l'adhérence de colloïdes et/ou l'encrassement sur la surface métallique ou contenant un métal, la surface de silicate, la surface de béton ou la surface de matière plastique.

15. Article selon la revendication 14, l'article étant un pipeline, un terminal de méthane, un dispositif médical, typiquement un tube médical, un article orthopédique, un dispositif implantable, un champ, un biocapteur, un implant dentaire, une valve cardiaque mécanique, un vaisseau sanguin extracorporel, un stent ou un outil chirurgical ; une partie d'un système de chauffage et/ou de refroidissement, typiquement un échangeur de chaleur, un condenseur de vapeur, une tour humide ou une tour de refroidissement ; un appareil ménager, une surface de contact alimentaire, un appareil industriel, un bain de dégraissage ou un élément architectural.

16. Article selon la revendication 14, l'article étant un composant électronique de céramique, typiquement un isolant, une carte de câblage, un condensateur ou un oxyde d'espacement ; un filtre de céramique (notamment de porcelaine) ; un appareil de chauffage, typiquement une plaque chauffante ou un chauffage par immersion ; des tuyaux en céramique ; des implants médicaux ou dentaires ; des outils ou des moules de céramique (notamment

de porcelaine).

**17.** Article selon la revendication 14, l'article étant un verre de silicate, un panneau de verre, par ex. un panneau de verre architectural ou des panneaux solaires ; une peinture au silicate, ou des fibres, typiquement des fibres d'isolation.

**18.** Article selon la revendication 14, l'article étant un dispositif médical, typiquement un tube médical, des plateaux de stérilisation, un article orthopédique, un instrument dentaire ou un outil chirurgical ; une partie d'un système de chauffage et/ou de refroidissement, une tour humide ou une tour de refroidissement ; un appareil industriel, ou un élément architectural ; une membrane d'étanchéification à l'eau, une membrane ou doublure de piscine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62680198
- EP 18306414
- WO 2018226854 A
- WO 2018017879 A
- WO 0205643 A2
- WO 2017223544 A
- EP 810239 B1


### Non-patent literature cited in the description


- Sulfobetaine zwitterionomers based on n-butyl acrylate and 2-ethoxyethyl acrylate: monomer synthesis and copolymerization behavior. *Journal of Polymer Science,* 2002, vol. 40, 511-523
- **WEN-FU LEE ; CHAN-CHANG TSAI.** Synthesis and solubility of the poly(sulfobetaine)s and the corresponding cationic polymers: 1. Synthesis and characterization of sulfobetaines and the corresponding cationic monomers by nuclear magnetic resonance spectra. *Polymer,* 1994, vol. 35 (10), 2210-2217
- **V. M. MONROY SOTO ; J. C. GALIN.** Synthesis and characterization. *Polymer,* 1984, vol. 25, 121-128
- **P. KOBERLE ; A. LASCHEWSKY.** Hydrophobically Modified Zwitterionic Polymers: Synthesis, Bulk Properties, and Miscibility with Inorganic Salts. *Macromolecules,* 1994, vol. 27, 2165-2173
- **V. M. CASTAÑO ; A. E. GONZÁLEZ ; J. CARDOSO ; O. MANERO ; V. M. MONROY.** Evidence of ionic aggregates in some ampholytic polymers by transmission electron microscopy. *J. Mater. Res.,* 1990, vol. 5 (3), 654-657
- **J. C. SALAMONE ; W. VOLKSON ; A.P. OISON ; S.C. ISRAEL.** Aqueous solution properties of a poly(vinyl imidazolium sulphobetaine). *Polymer,* 1978, vol. 19, 1157-1162
- **FAVRESSE, PHILIPPE ; LASCHEWSKY, ANDRE.** New poly(carbobetaine)s made from zwitterionic diallylammonium monomers. *Macromolecular Chemistry and Physics,* 1999, vol. 200 (4), 887-895
- **M-L. PUJOL-FORTIN et al.** Poly(ammonium alkoxydicyanatoethenolates) as new hydrophobic and highly dipolar poly(zwitterions). 1. Synthesis. *Macromolecules,* 1991, vol. 24, 4523-4530
- **SCHNEIDER, C. A. ; RASBAND, W. S. ; ELICEIRI, K. W.** NIH Image to ImageJ: 25 years of image analysis. *Nature methods,* 2012, vol. 9 (7), 671-675